# EUROPEAN PATENT APPLICATION

(11) **EP 1 686 585 A1**
(43) Date of publication of application: **02.08.2006**
(21) Application number: 05112002.0
(22) Date of filing: 13.12.2005
(51) Int. Cl.: G11B 27/10, G11B 27/32, G11B 27/24, G11B 7/0045, G11B 7/007, G11B 27/034

(54) **Information recording and reproducing apparatus and information recording method**

(30) Priority: 31.01.2005 JP 2005024482
(71) Applicant: KABUSHIKI KAISHA TOSHIBA, Tokyo 105-8001 (JP)
(72) Inventor: Usui, Takashi Toshiba Corp., IP Division, Tokyo 105-8001 (JP); Ogawa, Akihito Toshiba Corp., IP Division, Tokyo 105-8001 (JP); Noda, Chosaku Toshiba Corp., IP Division, Tokyo 105-8001 (JP); Kashihara, Yutaka Toshiba Corp., IP Division, Tokyo 105-8001 (JP)
(74) Representative: Henkel, Feiler & Hänzel

(57) **Abstract**

An attempt is made to make it possible to efficiently perform the finalizing process and closing process in a short period of time. When the border closing or finalizing process is performed after user data is recorded, latest recording management data (RMD) is recorded (SA2) in a recording management data duplication zone (RDZ) of a data lead-in area, latest recording management data (RMD) is recorded (SA3) in an unrecorded area of a present recording management zone (RMZ) and R physical format information (R-PFI) is recorded (SA4) in an R physical format information zone (R-PFIZ) in a first step and a padding process is performed (SA5) for at least a discontinuous area in the data area and a border-out is lastly recorded (SA6) in a second step.

## Description

This invention relates to an information recording and reproducing apparatus and an information recording method using an information storage medium (or information recording medium).

An optical disk called a Digital Versatile Disk (DVD) is provided as an information storage medium. As the standard of the present DVD, a read-only DVD-ROM standard, write-once read-multiple DVD-R standard, rewritable (approximately 1000 times) type DVD-RW standard and rewritable (10000 times or more) type DVD-RAM standard are provided.

In the recordable DVD standard, intermediate information (recording (position) management information) at the time of interruption of recording is recorded inside a lead-in area. In this case, it is necessary to additionally record intermediate information once each time interruption of recording occurs. Since the number of interruptions of recording is increased as the recording density become higher and the data amount becomes larger, the data amount of intermediate information is increased. Recording data and intermediate information are respectively recorded into different exclusive areas by taking the convenience of edition of recording data into consideration. Therefore, even if the recording area for recording data is available, the recording location for intermediate information specified inside the lead-in area is saturated, the recording location for intermediate information disappears and the recording operation cannot be performed when the number of interruptions of recording is increased. As a result, in the present standard, the upper number of interruptions of recording permitted for each optical disk (information storage medium) is limited and a problem that the convenience for the user is lost occurs.

Further, it is necessary to perform a finalizing process after information is recorded on an information storage medium. However, it takes a long time to completely terminate the finalizing process. Therefore, it is proposed to shorten the time required for the finalizing process (Jpn. Pat. Appln. KOKAI Publication No. 2003-132630 (US 2003/81525)). However, the above proposal is to shorten the processing time by omitting processing and cannot be applied to a case wherein the processing cannot be reduced.

It is also proposed to enhance the speed of access to an optical disk although this is not directly associated with the finalizing process (Jpn. Pat. Appln. KOKAI Publication No. H9-138954). However, the proposal is an optical head control method which controls the optical head based on a combination of rough and fine access.

In a recordable information storage medium, the upper number of interruptions of recording is limited and a problem that the convenience is lost occurs. Further, there occurs a problem that the processing time becomes longer at the time of the finalizing process or border closing process.

An object of the embodiments is to provide an information recording and reproducing apparatus and information recording method capable of managing a border area without causing any problem even when the number of interruptions of recording is increased by extending a management area which is used to manage a recording end position and effectively performing a finalizing process and border closing process without extending the time required for the finalizing process and border closing process even if the management area is extended.

An information recording method according to an aspect of the present invention which sets an extended recording (position) management zone (ExRMZ) in a data area with respect to a write once read many information storage medium having the data area and a data lead-in area in which a recording management data (RMD) duplication zone (RDZ), a recording position management zone or recording management zone (RMZ) used to record recording position management data or recording management data (RMD) and an R physical format information zone (R-PFIZ) used to record physical format information (R-PFI) comprises recording at least latest recording management data (RMD) in the recording management data duplication zone (RDZ) of the data lead-in area in a first step when one of a border closing process and finalizing process is performed after user data is recorded, and at least padding a discontinuous area in the data area and recording a border-out area in a last position of an information recording position in a second step.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a configuration explanatory diagram of an information recording and reproducing apparatus according to one embodiment of this invention;
FIG. 2 is an explanatory diagram showing one embodiment of this invention, for illustrating the information recording state of an optical disk;
FIG. 3 is a flowchart for illustrating the operation of an apparatus for realizing the information recording state shown in FIG. 2;
FIG. 4 is an explanatory diagram showing another embodiment of this invention, for illustrating the information recording state of an optical disk;
FIG. 5 is a flowchart for illustrating the operation of an apparatus for realizing the information recording state shown in FIG. 4;
FIG. 6 is an explanatory diagram showing still another embodiment of this invention, for illustrating the information recording state of an optical disk;
FIG. 7 is a flowchart for illustrating the operation of an apparatus for realizing the information recording state shown in FIG. 6;
FIG. 8 is a diagram showing the configuration and dimensions of an information storage medium in the present embodiment;
FIG. 9 is a diagram showing a setting method of a physical sector number in a write once read many information storage medium or a reproduce-only information storage medium having a one-layer structure;
FIG. 10 is a diagram showing values of general parameters in the write once read many information storage medium;
FIG. 11 is a diagram showing the detail data structure in a data lead-in area DTLDI and system lead-in area SYLDI in the write once read many information storage medium;
FIG. 12 is an explanatory diagram of physical format information (PFI);
FIG. 13 is an explanatory diagram of the basic concept of recording (position) management data (RMD);
FIG. 14 is a flowchart for illustrating the processing procedure immediately after an information storage medium is mounted on the information reproducing apparatus or information recording and reproducing apparatus;
FIG. 15 is a flowchart for illustrating an additionally recording method of recording information into the write once read many information storage medium in the information recording and reproducing apparatus;
FIG. 16 is a diagram showing the concept of a method for setting an extendable recording management zone RMZ;
FIG. 17 is a diagram showing a detailed portion of FIG. 16;
FIG. 18 is an explanatory diagram of a border zone;
FIG. 19 is a diagram showing a closing process for second and successive bordered areas in the information recording and reproducing apparatus;
FIG. 20 is a diagram showing a processing method in a case where the finalizing process (finalize) is performed after the bordered area is once closed in the information recording and reproducing apparatus;
FIG. 21 is a diagram showing the principle of an extended recording management zone ExRMZ recorded in the border-in;
FIG. 22 is an explanatory diagram of an R zone;
FIG. 23 is a conceptual explanatory diagram for illustrating a method capable of additionally recording a plurality of portions at the same time by use of the R zones;
FIG. 24 is a diagram showing the relation between the R zone setting method and the recording management data RMD in the information recording and reproducing apparatus;
FIG. 25 is a diagram showing the relation between the R zone and the recording management data RMD when the first bordered area is closed;
FIG. 26 is an explanatory diagram for illustrating the finalizing process (finalize) in the information recording and reproducing apparatus;
FIG. 27 is a principle explanatory diagram for illustrating a method of setting an extended recording management zone ExRMZ using the R zone;
FIG. 28 is a diagram showing the relation between the newly set extended recording management zone ExRMZ using the R zone and the recording management data RMD;
FIG. 29 is a conceptual explanatory diagram for illustrating a processing method when an existing recording management zone RMZ becomes full in the same bordered area;
FIG. 30 is an explanatory diagram for illustrating a recording position searching method of the latest recording management data RMD using the RMD duplication zone RDZ in the information reproducing apparatus or information recording and reproducing apparatus;
FIG. 31 is a diagram showing the data structure of the recording management zone RMZ and RMD duplication zone RDZ in the write once read many information storage medium;
FIG. 32 is a diagram showing the data structure of the recording management data RMD;
FIG. 33 is an explanatory diagram showing the structure of a border area in the write once read many information storage medium; and
FIG. 34 is a flowchart for illustrating a creating method of creating a "mark NBM indicating next border" by the overwriting process.

There will now be described an information recording and reproducing apparatus, information reproducing apparatus, information recording method and information reproducing method according to embodiments of this invention with reference to the accompanying drawings.

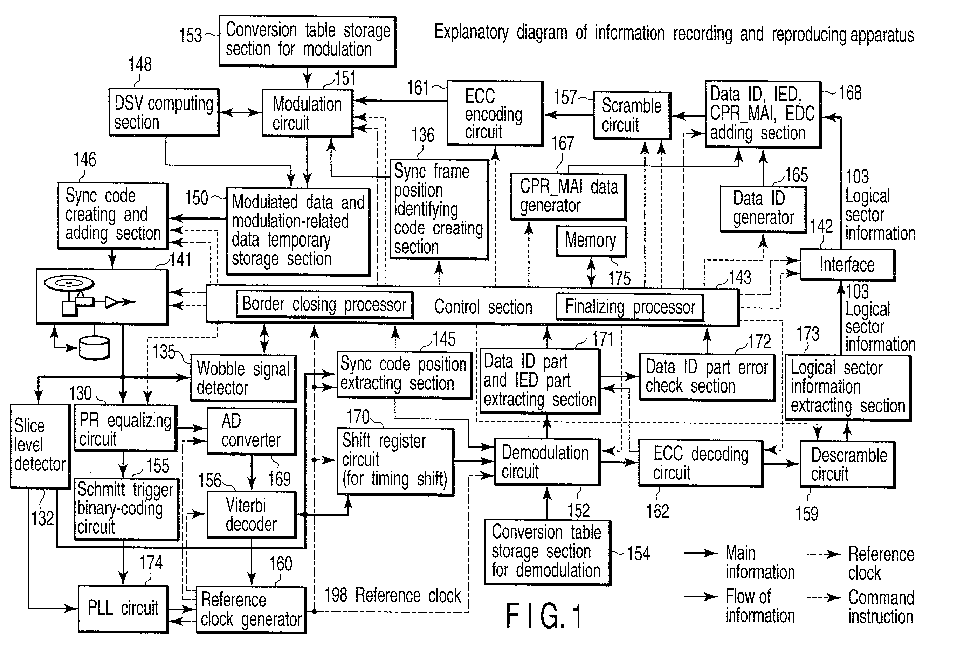

FIG. 1 is a configuration explanatory diagram of an information recording and reproducing apparatus according to one embodiment of this invention. In FIG. 1, a portion which lies above a control section 143 expresses a recoding signal processing portion mainly for an information storage medium and a portion which lies below the control section 143 expresses a reproducing signal processing portion. A information recording and reproducing section 141 includes an optical head and moving position controller therefor and is generally controlled by control signals from the control section 143. The optical head can be used to optically read recording information on an optical disk and optically record information on the optical disk. The optical head follows the recording track of the optical disk according to tracking servo and focusing servo.

In FIG. 1, arrows of thick solid lines indicate the flow of main information which indicates a reproducing signal or recording signal, arrows of thin solid lines indicate the flow of information, arrows of one-dot-dash lines indicate a reference clock line and arrows of thin broken lines indicate a command specifying direction.

An optical head (not shown) is arranged in the information recording and reproducing section 141 shown in FIG. 1. In the present embodiment, the information reproducing process is performed by use of a Partial Response Maximum Likelihood (PRML) method to enhance the density of an information storage medium. As the results of various experiments, it is understood that the line density can be enhanced and the reliability of a reproducing signal (the demodulation reliability when a servo correction error caused by blooming or tracking deviation occurs, for example) can be enhanced by using PR(1,2,2,2,1) as a PR class, and therefore, PR(1,2,2,2,1) is used in the present embodiment.

In this embodiment, a channel bit string after modulation is recorded on an information storage medium according to a (d, k; m, n) modulation rule (which indicates RLL(d, k) of m/n modulation in the method described before). Specifically, an eight-to-twelve modulation (ETM) method for converting 8-bit data into 12-channel bits (m=8, n=12) is used as the modulation system. In this case, the condition of RLL(1, 10) in which the minimum value d of successive 0s is set to 1 and the maximum value k is set to 10 is imposed as the run-length limited (RLL) restriction in which the limitation is imposed on the length of successive 0s in the channel bit string after modulation. In the present embodiment, the channel bit duration is shortened to a value close to the limit so as to enhance the density of the information storage medium. As a result, for example, when a pattern of "101010101010101010101010" which is a repetition of a pattern of d=1 is recorded on the information storage medium and the data is reproduced by use of the information recording and reproducing portion 141, the signal amplitude of a reproduced signal is almost buried in noise since the frequency thereof is set closer to the cut-off frequency of the MTF characteristic of the reproduction optical system. Therefore, the technique of a PRML method is used as a method for reproducing recording marks or pits whose density is set closer to the limit (cut-off frequency) of the MTF characteristic.

A signal reproduced in the information recording and reproducing section 141 is subjected to a reproduced wave correction process by a PR equalization circuit 130. A signal after passing through the PR equalization circuit 130 is sampled and converted into a digital amount in synchronism with timing of a reference clock 198 supplied from a reference clock generation circuit 160 by use of an analog-to-digital converter 169 and is then subjected to a Viterbi decoding process in a Viterbi decoder 156. Data having been subjected to the Viterbi decoding process is processed as the completely same data as data binary-coded at the conventional slice level. When the technique of the PRML method is used, the data error rate after Viterbi decoding is increased if the sampling timing in the AD converter 169 is shifted. Therefore, in order to enhance the precision of the sampling timing, in the information recording apparatus or information recording and reproducing apparatus of the present embodiment, particularly, a sampling timing extracting circuit (a combination of a Schmitt trigger binary-coding circuit 155 and PLL circuit 174) is separately provided.

The Schmitt trigger binary-coding circuit 155 causes the slice reference level used for binary coding to have specified width (in practice, the forward voltage of a diode) and has a characteristic in which data is binary-coded only when the specified width is exceeded. Therefore, for example, when a pattern of "101010101010101010101010" is input as described above, the signal amplitude is extremely small, and therefore, the switching to binary coding does not occur. For example, when a pattern of "1001001001001001001001" which is coarse in comparison with the above pattern is input, the amplitude of the reproduced signal becomes large and the polarity switching of a binary-coded signal occurs in synchronism with timing of "1" in the Schmitt trigger binary-coding circuit 155. In the present embodiment, an non-return to zero-invert (NRZI) method is utilized and the position of "1" in the above pattern coincides with the edge portion (boundary portion) of the recording mark or pit.

A slice level detector 132 utilizes a slice level detecting system and is used at the reproduction time in a system lead-in area and system lead-out area.

In a PLL circuit 174, the frequency deviation and phase shift between the binary-coded signal which is an output of the Schmitt trigger binary-coding circuit 155 (or the binary-coded signal from the slice level detector 132) and the reference clock signal 198 supplied from the reference clock generator 160 are detected and the frequency and phase of the output clock of the PLL circuit 174 are changed accordingly. In the reference clock generator 160, a feedback operation is performed for (the frequency and phase of) the reference clock 198 to lower the error rate obtained after Viterbi decoding by use of the output signal of the PLL circuit 174 and decoding characteristic information of the Viterbi decoder 156 (information of the focusing length (distance to the focusing) in a pass metric memory of the Viterbi decoder 156 although not specifically shown in the drawing). The reference clock 198 generated from the reference clock generator 160 is utilized to define reference timing at the processing time of the reproduced signal.

A sync code position extracting section 145 detects the existing position of a sync code which lies in an output data string of the Viterbi decoder 156 and functions to extract a start position of the output data. Data temporarily stored in a shift register circuit 170 is subjected to the demodulation process by use of a demodulation circuit 152 with the start position set as a reference. In this embodiment, data is restored to an original bit string with reference to a conversion table recorded in a conversion table recording section 154 for demodulation for every 12-channel bits. Then, the data is subjected to an error correction process by an ECC decoding circuit 162 and descrambled by a descramble circuit 159. Extraction of a data ID part and IED part in the ECC block from the demodulation signal is made by use of an extracting section 171 and error checking with respect to the data ID part is carried out by a checking section 172. If an error exists in ID, the reading operation is performed again.

Further, logical sector information is extracted from the output of the descramble circuit 159 by an extracting section 173 and is output to the exterior via an interface section 142. The interface section 142 receives logical sector information from the control section 143 and supplies the same to a recording-series adding section 168 when the apparatus performs a recording operation.

In the write once read many information storage medium of the present embodiment, address information is previously recorded according to wobble modulation. The address information is reproduced (that is, the contents of a wobble signal are determined) by an wobble signal detector 135 and information required for accessing to a desired location is supplied to the control section 143.

The information recording control system which lies above the control section 143 is explained. When data ID information is generated from a data ID generating section 165 according to the recording position on an information storage medium and copy control information is generated from a CPR_MAI data generating section 167, various information items such as data items ID, IED, CPR_MAI, EDC are added to information to be recorded by a data ID, IED, CPR_MAI, EDC adding section 168. After this, the data is descrambled by the descramble circuit 157, and then an ECC block is formed by an ECC encoding circuit 161 and converted into a channel bit string by the demodulation circuit 151. At this time, a channel bit string of the conversion table recording section 153 at the modulation time is utilized. The channel bit string is temporarily stored in a modulated data and modulation-related data temporary storage section 150 and output to a sync code creating and adding section 146 at recording timing. A set of the channel bit strings configures an ECC block which is used as a recording unit. At this time, the ECC block configures a set of sync frames and a sync frame position identifying code is created by a sync frame position identifying code creating section 136 and is utilized as modulation-related information. After this, a sync code is added to the above information by the sync code creating and adding section 146 and data is recorded on an information storage medium by the information recording and reproducing section 141. Further, at the time of modulation, DSV values obtained after modulation are sequentially calculated by a digital sum value (DSV) computing section 148 and fed back to code conversion at the time of modulation.

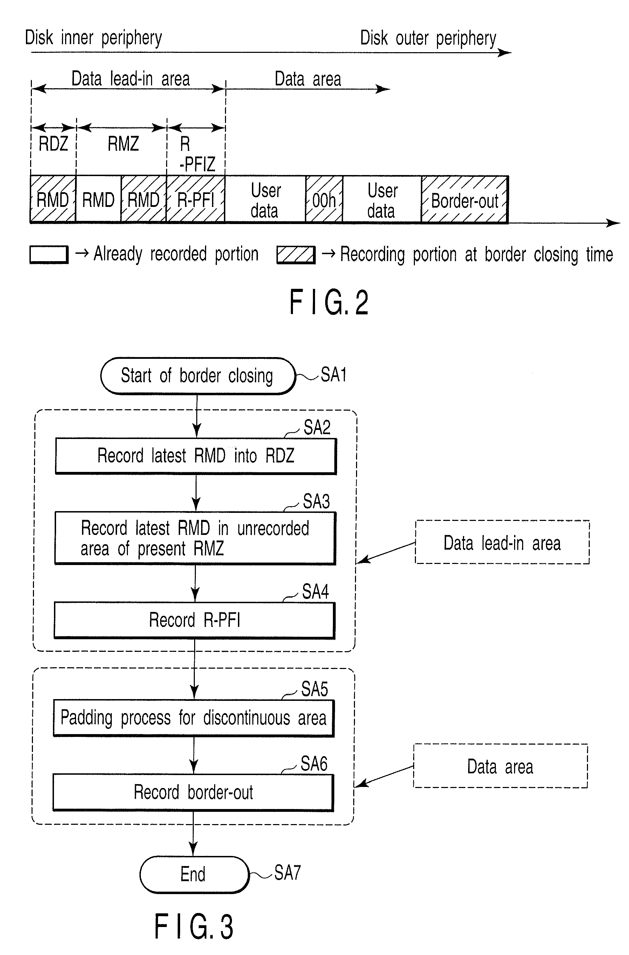

Next, the main portion according to this invention is explained with reference to FIGS. 2 to 7. FIG. 2 schematically shows a state in which an optical disk is cross-sectioned from the inner periphery to the outer periphery along the radius and indicates various areas. The optical disk is a write once read many information recording medium. The optical disk has a data lead-in area and data area.

Now, various terms and some rules are simply explained. Recording management data (RMD) contains data used to manage the recording state of an R disk. One RMD has 22 fields which will be described in detail later. The updating timing of RMD is (1) time at which the disk is initialized, (2) time at which reservation of RZone is made or the closing operation is performed, (3) time at which the border is closed or RMZ is extended, or (4) time at which a preset amount of user data is recorded and the recording operation is interrupted.

RZone is used as a unit with which the drive manages the recording position. That is, in the write once read many disk, the recording position of user data is managed by the drive separately from a file system in order to maintain the physical state. RMD is recorded on the disk and the number of (additionally recordable) RZone which is now used, the start physical segment number of RZone and the last recorded position (last recorded address [LRA]) are contained therein. The additionally recordable RZone always includes up to three RZones. The additionally recording operation is started from the last recorded position (next writable address [NWA]) of the additionally recordable RZone.

The recording management zone (RMZ) is an area in which RMD is held. Initial RMZ is prepared in the data lead-in area. When RMZ is used up, it becomes impossible to record data on the disk even if an available area is left behind. Therefore, in order to solve the above problem, RMZ can be extended. The extended area is set as ExRMZ. Two types of ExRMZs are provided, one is secured in a border area (an area in which user data is recorded) and the other is secured in a border zone.

The RMD duplication zone (RDZ) is utilized to manage the position of ExRMZ. The border zone is configured by border-out and border-in (areas). The border zone is recorded by the border closing operation. The operation is explained in detail later. Physical format information (PFI) contains disk management information and is information which can be read by use of a ROM player. Three types of PFIs are provided according to the recording position. In the PFI in a system lead-in area, common information of HD DVD families, last address of the data area and strategy information are recorded. In the PFI in a data lead-in area, a copy of common information of HD DVD families and an outermost peripheral address of the first border are recorded. In the update PFI in the border-in area in the user area, a copy of common information of HD DVD families and an outermost peripheral address of the self border are recorded.

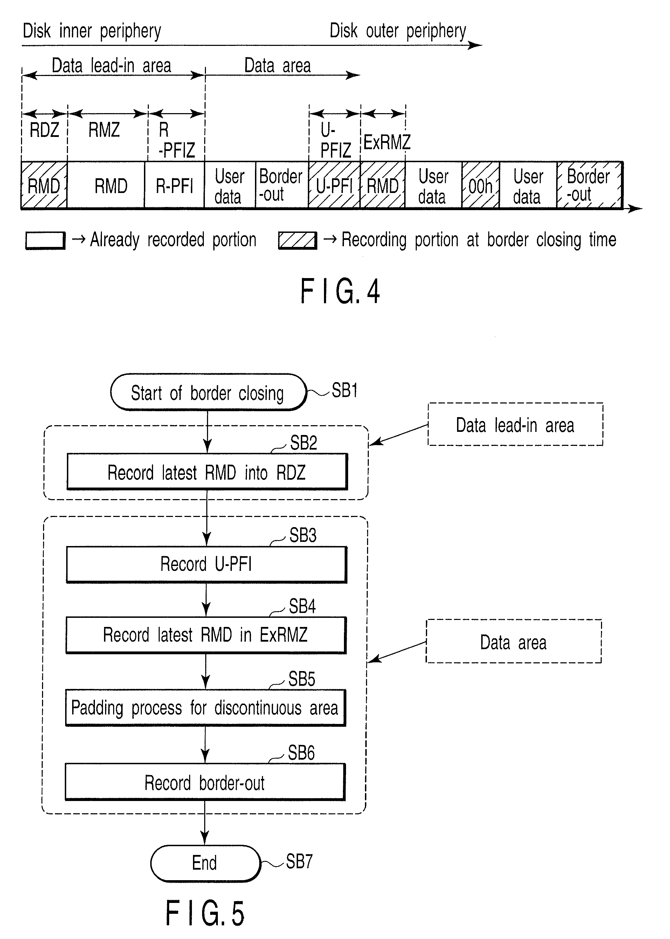

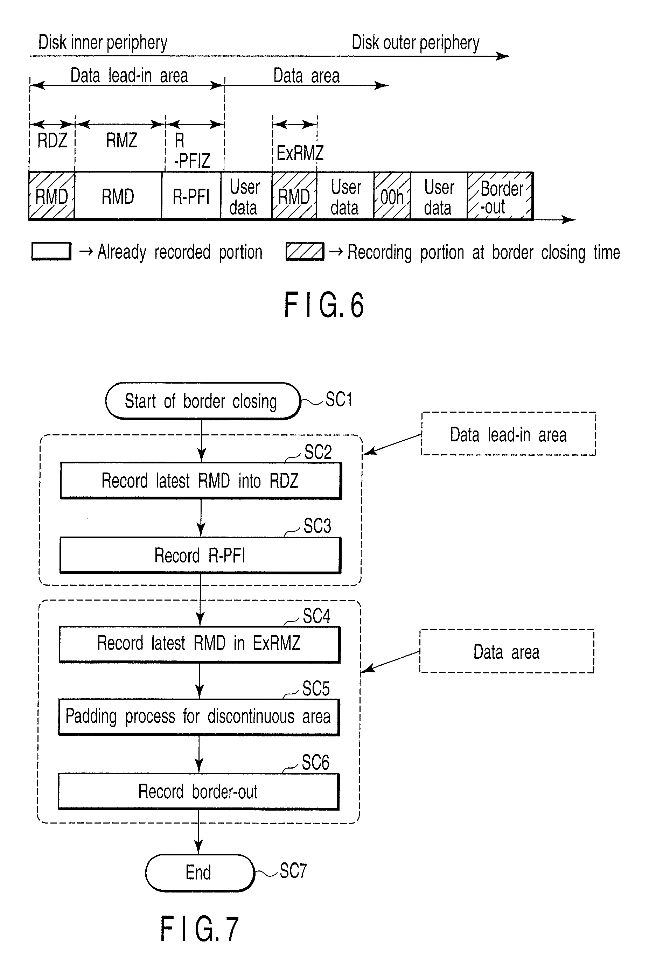

Now, the explanation is made with reference to FIGS. 2 and 3. In the data lead-in area, an RMD duplication zone (RDZ), a recording management zone (RMZ) used to record RMD and an R physical format information zone (R-PFIZ) used to record physical format information are provided. In the data area, an extended recording management zone (ExRMZ) can be set (shown in FIGS. 4 and 6). Further, in the data area, an R physical format information zone (U-PFIZ) extended for updating can be set (shown in FIG. 4).

In FIGS. 2, 4, 6, a void square indicates an already recorded portion, and a hatched square indicates a processing portion at the border closing time.

The flowchart when the recording operation into the hatched portion shown in FIG. 2 at the border closing time is performed is shown in FIG. 3. That is, when the border closing or finalizing process is performed after recording user data, the information recording processing section records at least the latest RMD into the RDZ of the data lead-in area in the first step (step SA2) and performs a padding process with respect to at least a discontinuous area in the data area (records "00h") (step SA5) and records the border-out in the last portion of the information recording position (step SA6) in the second step.

In the first step, the latest RMD is recorded in an unrecorded area of the present record management data zone (RMDZ) (step SA3) and R physical format information (R-PFI) is recorded in the R-PFIZ (step SA4). That is, information items are sequentially recorded starting from the data lead-in area toward the disk outer periphery.

By performing the above recording procedure (steps SA1 to SA7), the useless movement of the optical head can be suppressed and the optical head can be efficiently moved. Thus, time required for the border closing and finalizing processes can be reduced. FIGS. 2 and 3 show examples of a case wherein the extension process for RMZ is not performed.

FIGS. 4 and 5 show examples of a case wherein RMZ extension, U-PFI are recorded. The information recording means holds an R-PFIZ extended for updating with respect to the data area and holds the ExRMZ. At the border closing or finalizing time, the information recording processing section records the latest recording management data (RMD) in the unrecorded area of the present RMZ in the first step (step SB2). In the second step, the information recording means records U-PFI in the extended U-PFIZ on the data area side (step SB3) and records the latest RMD in the ExRMZ (step SB4). After this, the padding process is performed with respect to a discontinuous area (records "00h") (step SB5) and records the border-out in the last portion of the information recording position (step SB6).

FIGS. 6 and 7 show examples of a case wherein RMZ is extended and R-PFI is recorded.

In the first step, the information recording processing section records the latest recording management data (RMD) in an unrecorded area of the present recording management data zone (RMDZ) (step SC2). Then, R physical format information (R-PFI) is recorded in the R physical format information zone (R-PFIZ) (step SC3). Next, in the second step, the latest recording management data (RMD) is recorded in the extended recording management zone (ExRMZ) (step SC4). After this, the padding process is performed with respect to a discontinuous area ("00h" is recorded) (step SC5) and the border-out is recorded in the last portion of the information recording position (step SC6).

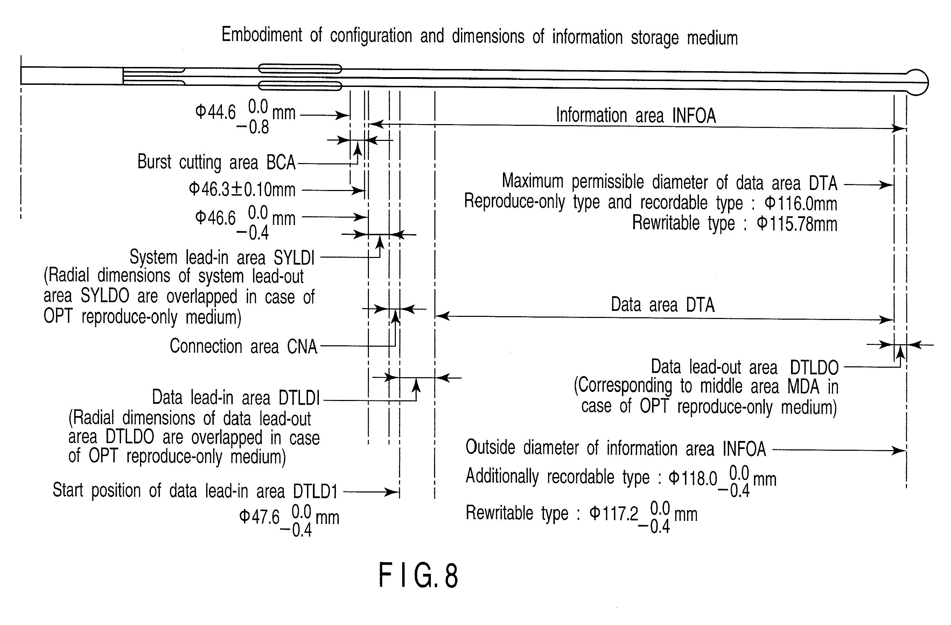

FIG. 8 shows the configuration and dimensions of an information storage medium according to the present embodiment. In the present embodiment, the following three types of information storage media are indicated.
- "Reproduce-only information storage medium" which is used only for reproduction and cannot be used for recording:

- "Write once read many information storage medium" which is additionally writable only once:

- "Rewritable information storage medium" which is rewritable for many times:

As shown in FIG. 8, the configurations and dimensions of most portions of the three types of information storage media are made common. In each of the three types of information storage media, a burst cutting area BCA, system lead-in area SYLDI, connection area CNA, data lead-in area DTLDI and data area DTA are sequentially arranged from the inner periphery side. A data lead-out area DTLDO is arranged in the outer peripheral portion of each medium other than an OPT type reproduce-only medium. As will be described later, a middle area MDA is arranged in the outer peripheral portion of the OPT type reproduce-only medium. Information is recorded in the system lead-in area SYLDI in the form of emboss (prepit) and the area is used only for reproduction (impossible to additionally record) in either the write once read many medium or rewritable type medium.

In the reproduce-only information storage medium, information is recorded in the form of emboss (prepit) also in the data lead-in area DTLDI. On the other hand, in the write once read many medium or rewritable type information storage medium, the data lead-in area DTLDI is used as an area in which new information can be additionally written (rewritten in the rewritable medium) by use of a recording mark. As will be described later, in the write once read many medium or rewritable type information storage medium, an area in which new information can be additionally written (rewritten in the rewritable medium) and a reproduce-only area in which information is recorded in the form of emboss (prepit) are provided together in the data lead-out area DTLDO. The density of the information storage medium is enhanced (particularly, the linear density is enhanced) by using a PRML method when a signal recorded in the data area DTA, data lead-in area DTLDI, data lead-out area DTLDO and middle area MDA shown in FIG. 8 is reproduced. At the same time, compatibility with the present DVD and stabilization of reproduction can be securely attained by using a slice level detection system when a signal recorded in the system lead-in area SYLDI and system lead-out area SYLDO is reproduced.

Unlike the present DVD standard, the burst cutting area BCA and system lead-in area STLDI are separated in position from each other without overlapping in the present embodiment shown in FIG. 8. By physically separating the above two areas, interference between information recorded in the burst cutting area BCA and information recorded in the system lead-in area SYLDI at the information reproduction time is prevented and information reproduction with high precision can be attained.

In the above information storage media, the minimum management unit of information recorded into the information storage medium is set to a sector unit of 2048 bytes. The physical address of the sector unit of 2048 bytes is defined as a physical sector number.

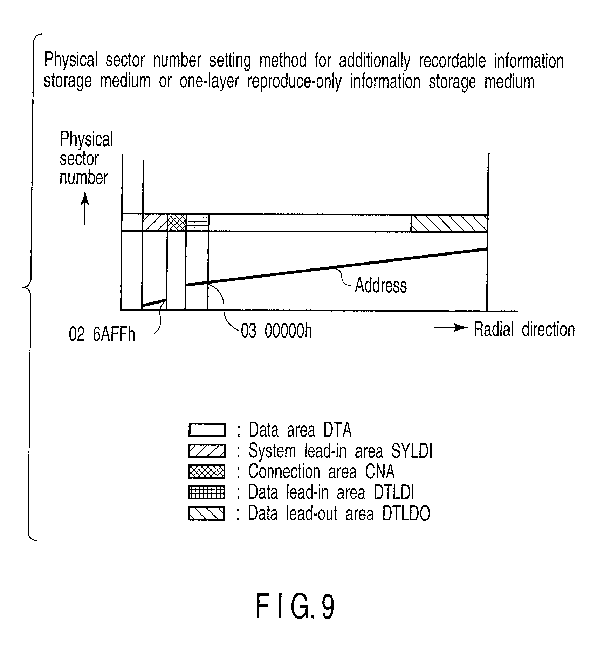

FIG. 9 shows a setting method of a physical sector number in a write once read many information storage medium. The physical sector number is not given to the burst cutting area BCA and connection area CNA and the physical sector numbers are set to the system lead-in area SYLDI, data area DTA and data lead-out area DTLDO in an ascending order from the inner peripheral portion. The physical sector number in the start position of the data area DTA is set to "030000h" so that the last physical sector number in the system lead-in area SYLDI will be set to "026AFFh".

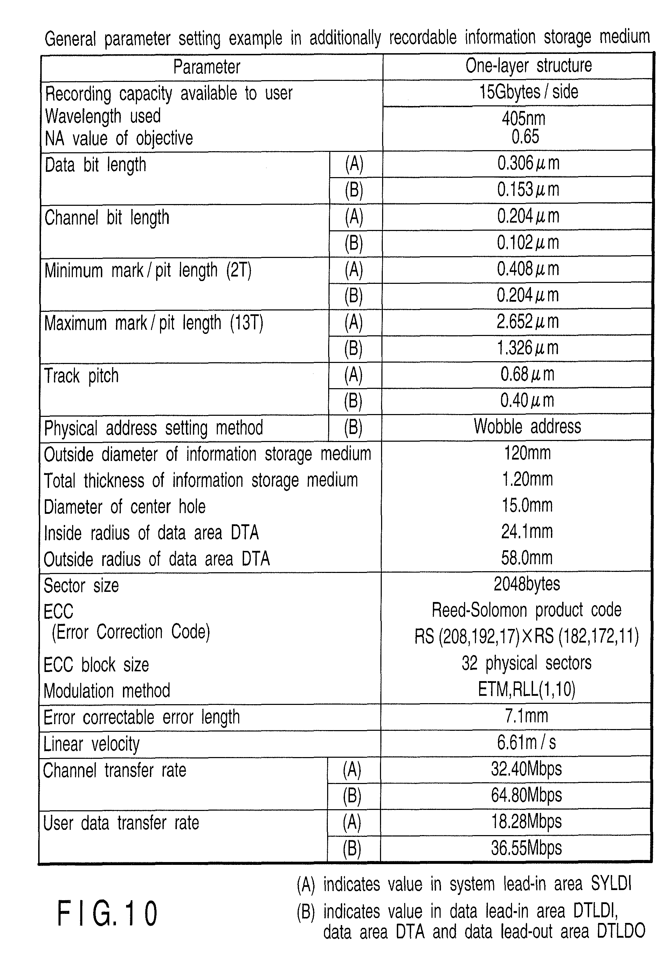

FIG. 10 shows parameter values in the write once read many information storage medium according to the present embodiment.

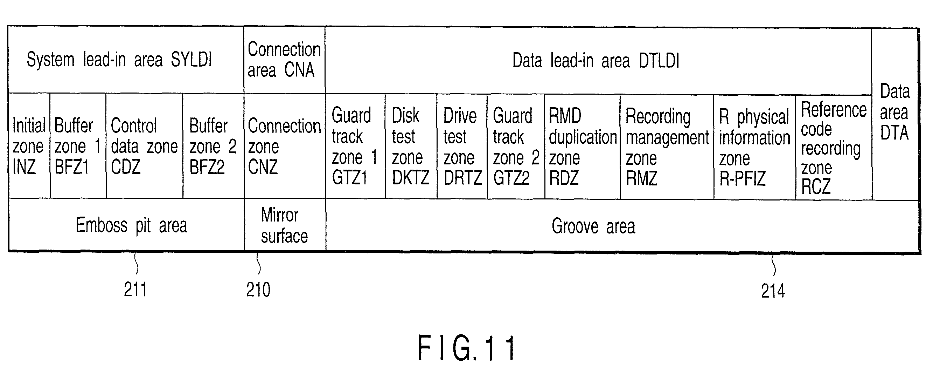

FIG. 11 shows the data structure of the write once read many information storage medium. Although not shown in the drawing, the burst cutting area BCA is provided inside the system lead-in area SYLDI. Information is recorded in the system lead-in area in the form of emboss. The connection area is a mirror portion.

As shown in FIG. 11, a data lead-in area DTLDI and data area DTA are formed in the groove area 214 in the case of the write once read many information storage medium. Information is recorded by forming recording marks in a land area (not shown) and groove area 214.

An initial zone INZ indicates the start position of the system lead-in area SYLDI. As information having a certain significance recorded in the initial zone INZ, data ID (Identification Data) information items containing information of the physical sector number or logical sector number are discretely arranged. Information of a data frame structure configured by data ID, IED (ID Error Detection code), main data used for recording user information and EDC (Error Detection Code) is recorded in one physical sector as will be described later. In this case, information of a data frame structure is also recorded in the initial zone INZ. However, since all of the information items of the main data used for recording user information are set to "00h" in the initial zone INZ, information having a certain significance in the initial zone INZ is only data ID information. The present position can be detected based on information of the physical sector number or logical sector number recorded therein. That is, in a case where information in the initial zone INZ starts to be reproduced when information reproduction from the information storage medium is started by use of the information recording and reproducing section 141 shown in FIG. 1, first, information of the physical sector number or logical sector number recorded in the data ID information is extracted and the position is moved to a control data zone CDZ while the present position in the information storage medium is being confirmed.

First, second buffer zones BFZ1, BFZ2 are each configured by 32 ECC blocks. Since one ECC block is configured by 32 physical sectors, 32 ECC blocks correspond to 1024 physical sectors. Like the case of the initial zone INZ, all of the information items of main data in the first, second buffer zones BFZ1, BFZ2 are set to "00h".

A connection zone CNZ existing in a connection area CNA is an area which physically separates the system lead-in area SYLDI and data lead-in area DTLDI and the area is a mirror surface which has no emboss pit and no pre-groove.

A reference code (recording) zone RCZ of the write once read many information storage medium is an area used for reproduction circuit adjusting of a reproduction apparatus and information of the data frame structure is recorded therein. The length of the reference code is set to one ECC block (= 32 sectors). The feature of the present embodiment lies in that the reference code zone RCZ of the reproduce-only information storage medium and write once read many information storage medium is arranged adjacent to the data area DTA. In the structure of either the present DVD-ROM device or present DVD-R device, a control data zone is arranged between the reference code zone and the data area and the reference code zone is separated from the data area. If the reference code zone is separated from the data area, the inclination amount and light reflectance of the information storage medium or the recording sensitivity of a recording film (in the case of a write once read many information storage medium) will be slightly changed. As a result, there occurs a problem that the optimum circuit constant in the data area is deviated even if the circuit constant of the reproduction apparatus is adjusted in the reference code zone. If the reference code zone RCZ is arranged adjacent to the data area DTA in order to solve the above problem and when the circuit constant of the information reproducing apparatus is optimized in the reference code zone RCZ, the optimum state can be held by use the same circuit constant in the adjacent data zone DTA. When it is desired to reproduce a signal with high precision in a desired portion in the data area DTA, the signal reproducing operation can be performed in a target position with extremely high precision by carrying out the following steps.
(1) Optimize the circuit constant of the information reproducing apparatus in the reference code zone RCZ:
→ (2) Optimize the circuit constant of the information reproducing apparatus again while a portion nearest to the reference code zone RCZ in the data area DTA is being reproduced:
→ (3) Optimize the circuit constant again while information is being reproduced in an intermediate position between the target position in the data area DTA and the position optimized in the step (2):
→ (4) The position is set to the target position and a signal is reproduced:

First, second guard track zones GTZ1, GTZ2 existing in the write once read many information storage medium and rewritable information storage medium are areas which define the start boundary position of the data lead-in area DTLDI and the boundary position between a disk test zone DKTZ and drive test zone DRTZ and the area is defined as an area in which information should not be recorded by forming a recording mark. Since the first, second guard track zones GTZ1, GTZ2 exist in the data lead-in area DTLDI, a pre-groove area is previously formed in the area in the case of the write once read many information storage medium and a groove area and land area are previously formed in the case of the rewritable information storage medium. Since wobble addresses are previously recorded in the pre-groove area or the groove area and land area, the present position in the information storage medium is determined by use of the wobble address.

The disk test zone DKTZ is an area used by the manufacturing maker of the information storage medium to make a quality test (evaluation).

The drive test zone DRTZ is provided as an area in which information is recorded on trial before the information recording and reproducing apparatus records information on the information storage medium. After the information recording and reproducing apparatus previously records information in the area on trial and determines the optimum recording condition (write strategy), it can record information in the data area DTA with the optimum recording condition.

As shown in FIG. 11, an RMD duplication zone RDZ, recording management zone RMZ and R physical information zone R-PFIZ independently exist in the write once read many information storage medium.

In the recording management zone RMZ, recording management data RMD which is management information related to the recording position of data updated by additionally recording the data is recorded.

In the present embodiment, for example, the recording management zone RMZ is set for each bordered area so as to make it possible to extend the area of the recording management zone RMZ. As a result, even if the number of additional recording operations is increased and the required area for the recording management data RMD is increased, this case can be coped with by sequentially extending the recording management zone RMZ. Therefore, the effect that the number of additional recording operations can be significantly increased can be attained. In this case, the recording management zone RMZ is arranged in the border-in area BRDI corresponding to each bordered area BRDA (arranged immediately before each bordered area BRDA) in the present embodiment. An attempt is made to efficiently use the data area DTA by commonly using the data lead-in area DTLDI and border-in (area) BRDI corresponding to the first bordered area BRDA#1 in the present embodiment and omitting formation of the first border-in area BRDI in the data area DTA. That is, the recording management zone RMZ in the data lead-in area DTLDI shown in FIG. 11 is used as the recording location of the recording management data RMD corresponding to the first bordered area BRDA#1.

The RMD duplication zone RDZ holds the recording management data RMD in an overlapping form as in the present embodiment in a position where information of the recording management data RMD which satisfies the following condition in the recording management zone RMZ is recorded. Thus, the reliability of the recording management data RMD is enhanced.

That is, when it becomes impossible to read out the recording management data RMD in the recording management zone RMZ due to the influence of dusts and scratches on the surface of the write once read many information storage medium, information of the latest recording management data RMD can be restored by reproducing the recording management data RMD recorded in the RMD duplication zone RDZ and collecting the remaining necessary information by tracing.

The recording management data RMD when a border (including a plurality of borders) is closed is recorded in the RMD recording management zone RDZ. A new recording management zone RMZ is defined each time one border is closed and a next new bordered area is set. Therefore, it can be said that each time a new recording management zone RMZ is created, last recording management data RMD relating to the bordered area in front of the new recording management zone is recorded in the RMD duplication zone RDZ.

If the same information is recorded in the RMD duplication zone RDZ each time recording management data RMD is additionally recorded on the write once read many information storage medium, the RMD duplication zone RDZ becomes full by performing a relatively small number of additional writing operations and thus the upper limit of the additional writing operations is set small. In comparison with this case, in the present embodiment, when a new recording management zone RMZ is formed, for example, when the border is closed or the recording management zone RMZ of the border-in BRDI becomes full and a new recording management zone RMZ is formed by use of an R zone as in the present embodiment, the number of additional writing operations can be increased by recording only the last recording management data RMD of the recording management zone RMZ so far used in the RMD duplication zone RDZ and effectively using the RMD duplication zone RDZ.

For example, when it becomes impossible to read out the recording management data RMD in the recording management zone RMZ corresponding to the bordered area BRDA in the course of additional writing (before closing the border) due to the influence of dusts and scratches on the surface of the write once read many information storage medium, information indicating the position of the bordered area BRDA which is already closed can be attained by reading out the recording management data RMD which is recorded in the last portion of the RMD duplication zone RDZ. Therefore, by tracing a location other than the data area DTA of the information storage medium, the location of the bordered area BRDA in the course of additional writing (before closing the border) and information contents recorded therein can be collected and thus information of the latest recording management data RMD can be restored.

The R zone indicates an area used by the drive to manage the recording position of user data separately from the file system in order to maintain the physically continuous state on the write once ready many storage medium.

Information similar to physical format information PFI in the control data zone CDZ shown in FIG. 11 is recorded in the R physical information zone R-PFIZ.

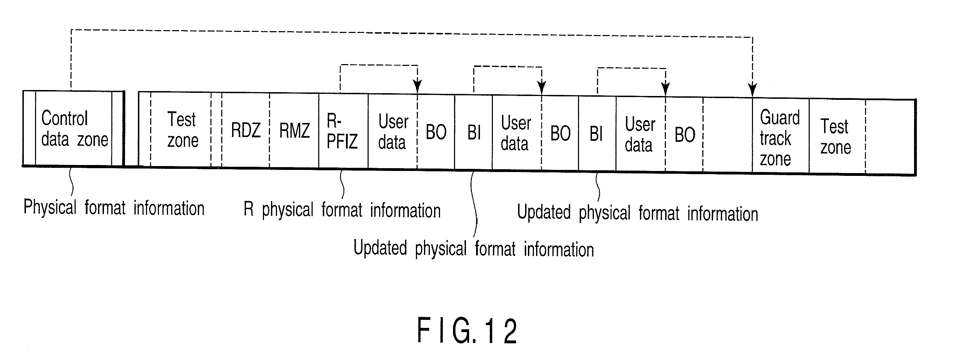

FIG. 12 is a diagram for illustrating the physical format information (PFI) in the present embodiment. Management information of the disk is held in the physical format information. The information can be read out by use of a ROM player. The following three types of physical format information items are present depending on the recording position.
(1) Physical Format Information PFI (in Control Data Zone CDZ of System Lead-in Area): Common information of HD DVD families/last address of the data area/strategy information and the like are recorded.
(2) R Physical Format Information R-PFI (in Data Lead-in Area): A copy of common information of HD DVD families/outermost peripheral address of the first border are recorded. The border-in (area) is also used as the data lead-in (area) in the first bordered area (information which is originally recorded in the border-in is recorded in the data lead-in). Therefore, no border-in for the first border exists.
(3) Updated Physical Format Information U-PFI (in Border-in Area): A Copy of common information of HD DVD families/outermost peripheral address of the self border are recorded.

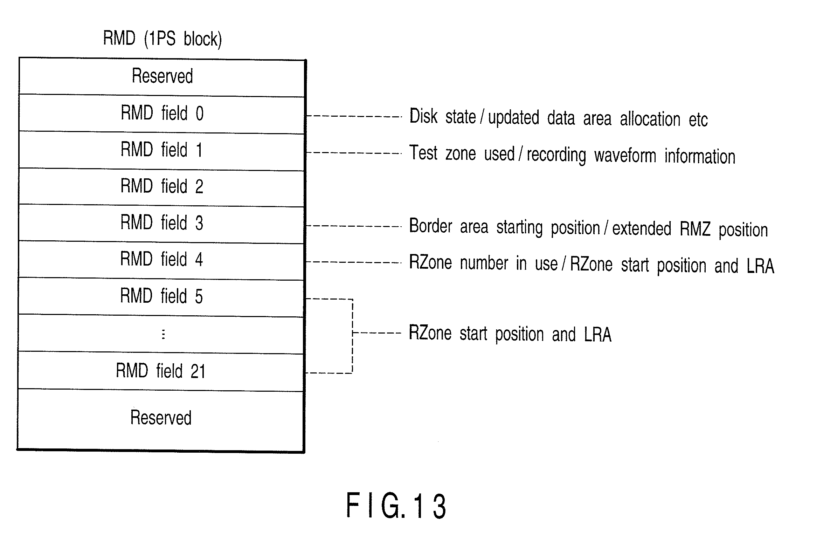

FIG. 13 is a diagram for illustrating the basic concept of recording management data (RMD) in the present embodiment. Data used to manage the recording state of the write once read many disk is held therein. One RMD is configured by one physical segment block and 22 fields are defined. The field "0" stores the state of the disk and updated data area location, the field "1" stores the test zone used and recording waveform information, the field "3" stores the start position of the border area and the position of extended RMZ, the field "4" stores the R zone number which is now used, the start position of the R zone and LRA (last recorded address), and the fields "5" to "21" store the start positions of R zones and LRA.

The update timing of RMD is defined as follows:
Time at which the disk is initialized:
Time at which the operation of reserving or closing the R zone or the like is performed:
Time at which the border is closed and RMZ is extended:
Time at which user data of a preset amount is recorded and the recording operation is interrupted:

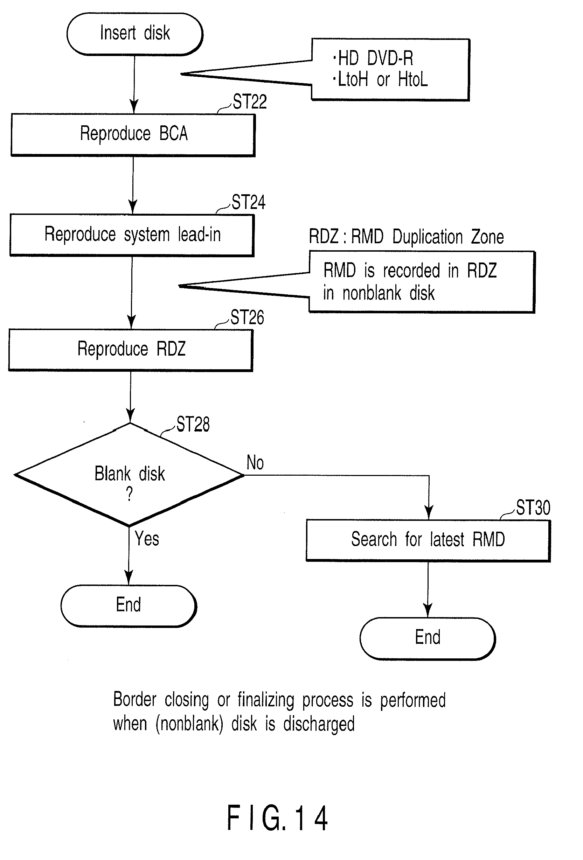

FIG. 14 is a flowchart for illustrating the processing procedure immediately after the information storage medium is mounted on the information reproducing apparatus or information recording and reproducing apparatus.

When a disk is mounted on the apparatus, the burst cutting area BCA is reproduced in the step ST22. In the present embodiment, an HD DVD-R disk is supported.

The system lead-in area is reproduced in the step ST24. Then, the RMD duplication zone RDZ is reproduced in the step ST26. Recording management data RMD is recorded in the RMD duplication zone RDZ of a nonblank disk. It is determined in the step ST28 whether the disk is a blank disk or not according to whether the recording management data RMD is recorded or not. In the case of the blank disk, the present process is terminated. In the case of the nonblank disk, the latest recording management data RMD is searched for in the step ST30 to detect the number of the additionally recordable R zone which is now used, the start physical segment number of the R zone and the last recording address LRA. In this case, up to three additionally recordable R zones can be set. The border closing or finalizing operation is performed when the nonblank disk is discharged.

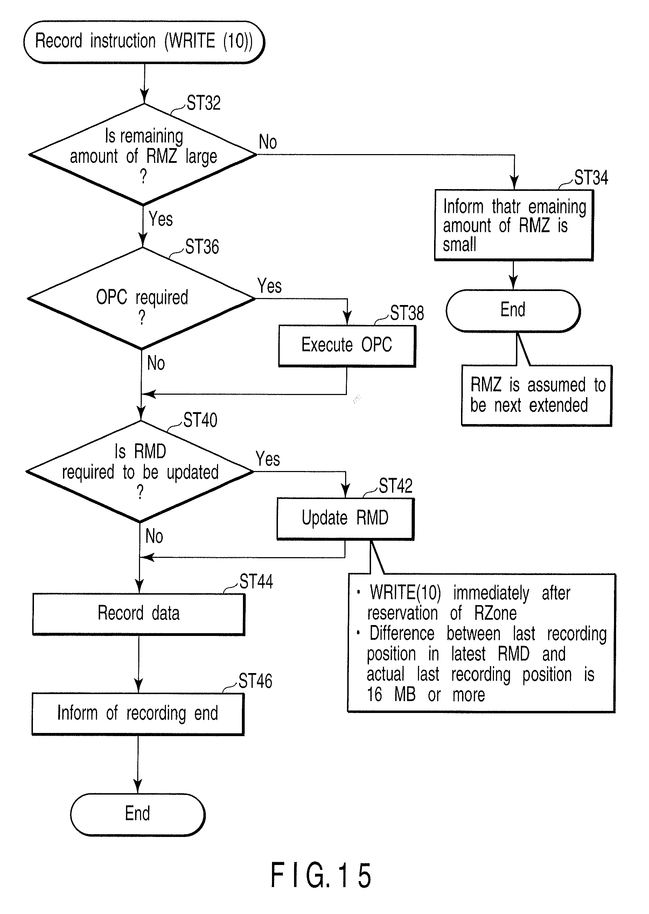

FIG. 15 is a flowchart for illustrating the additionally recording method of recording information into the write once read many information storage medium in the information recording and reproducing apparatus of the present embodiment. When an instruction of recording (write (10)) is given from the host, it is determined in the step ST32 whether or not a sufficient amount of the recording management zone RMZ into which the recording management data RMD is recorded is left behind. If the sufficient amount of the zone is not left behind, information of "the remaining amount of RMZ is small" is supplied to the host in the step ST34. In this case, it is supposed that the recording management zone RMZ will be extended.

If the sufficient amount of the zone is left behind, whether an OPC (a process of recording the extent to which the trial write operation is performed) is required or not is determined in the step ST36. If the OPC is required, the OPC is performed in the step ST38 and whether updating of the recording management data RMD is required or not is determined in the step ST40. The case where updating of the data RMD is required is a case wherein an instruction of recording is issued immediately after R zone reservation and a case wherein a difference between the last recording address NWA in the latest RMD and actual last recording address NWA is 16 MB or more. The recording management data RMD is updated in the step ST42, data is recorded in the step ST44, the end of the recording operation is informed to the host in the step ST46 and the operation is terminated.

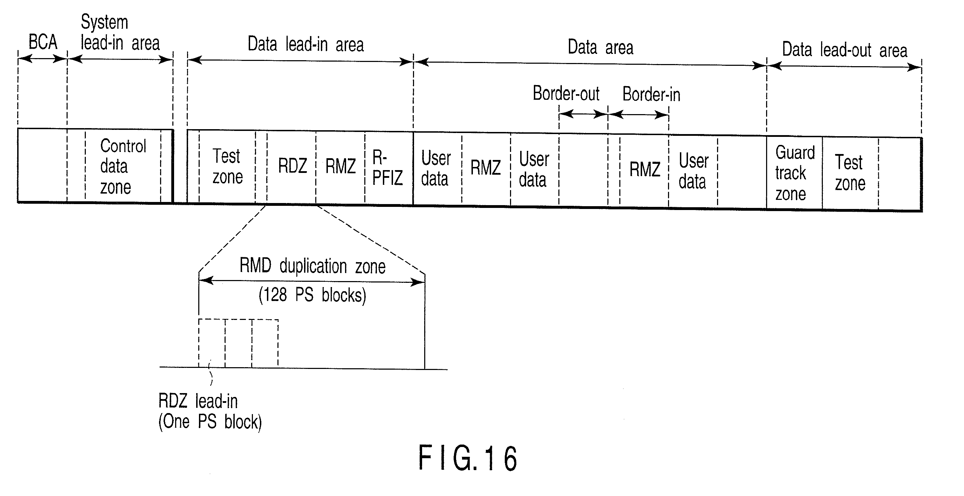

FIG. 16 is a diagram for illustrating the concept of a method for setting an extendable recording management zone RMZ in the present embodiment. Initially, the recording management zone RMZ used to hold the recording management data RMD is set in the data lead-in area. When the recording management zone RMZ is used up, it becomes impossible to record data on the disk even if the data area is available. Therefore, when the remaining amount of the recording management zone RMZ becomes small, the extended recording management zone ExRMZ is set. The extended recording management zone ExRMZ can be set in the bordered area in which user data is recorded or in the border zone (configured by the adjacent border-out and border-in). That is, the extended recording management zone ExRMZ in the bordered area and the extended recording management zone ExRMZ in the border-in can be provided together in the disk.

If the extended recording management zone ExRMZ is set, the latest recording management data RMD is copied as one physical segment block into the RMD duplication zone RDZ. The RMD duplication zone RDZ is used to manage the position of the extended recording management zone ExRMZ. The latest recording management data RMD is copied as one physical segment block into the RMD duplication zone RDZ each time the extended recording management zone ExRMZ is newly set. One latest recording management data RMD is copied into the RMD duplication zone RDZ each time the extended recording management zone ExRMZ is filled with a plurality of RMDs.

Since the RMD duplication zone RDZ is configured by 128 physical segment blocks, the recording management zone RMZ can be extended by 127 times in the disk and the maximum number of border zones in the disk is 128. The recording management data RMD can be extended up to 16384 times by use of the 127 extended recording management zones ExRMZ in the bordered area.

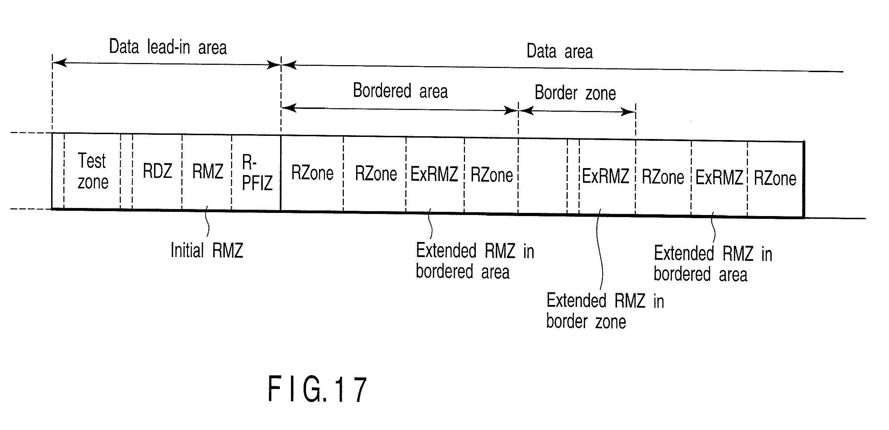

FIG. 17 is a diagram showing the detail portion of FIG. 16. That is, the extended recording management zone ExRMZ in the bordered area is set between adjacent R zones. When it is extended into the border zone, it is generally set in the end of the border-in.

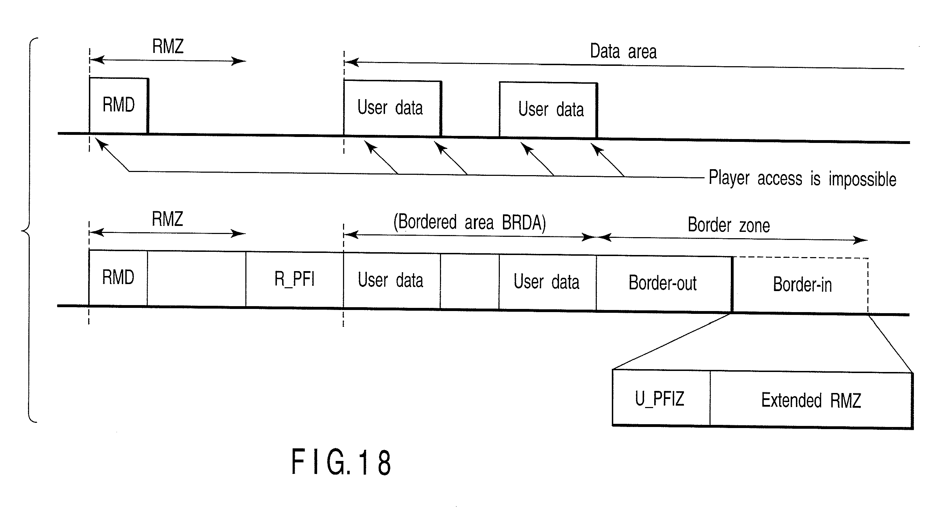

FIG. 18 is an explanatory diagram of a border zone in the present embodiment. A border zone is recorded in order to make it possible to reproduce information by use of a ROM player in which a track is detected in a DPD system. The border zone is configured by border-in and border-out areas. Since tracking to the groove cannot be attained by the player, access to the end of recording data and the recording management data RMD cannot be made if an unrecorded area exists in the disk. Since the track detection method of the ROM player is a DPD system, existence of prepits is necessary as a prerequisite. The recording film of the DVD-R disk is designed to cause phase shifting in a recording mark position and the phase shifting is regarded as if it is a prepit. Therefore, it becomes necessary to record an overrun area for reproduction of recording data and management information which can be read out by use of the ROM player. The former is recorded as the border-in and the latter is recorded as the border-out.

The border zone is recorded by performing the border closing operation. At the border closing time, the following operations are performed.
(1) A discontinuous area of user data and present recording management zone RMZ is padded:
(2) R physical format information R-PFI is recorded:
(3) Border-out is recorded:

Updated physical format information U-PFI and extended RMZ are recorded in the border-in.

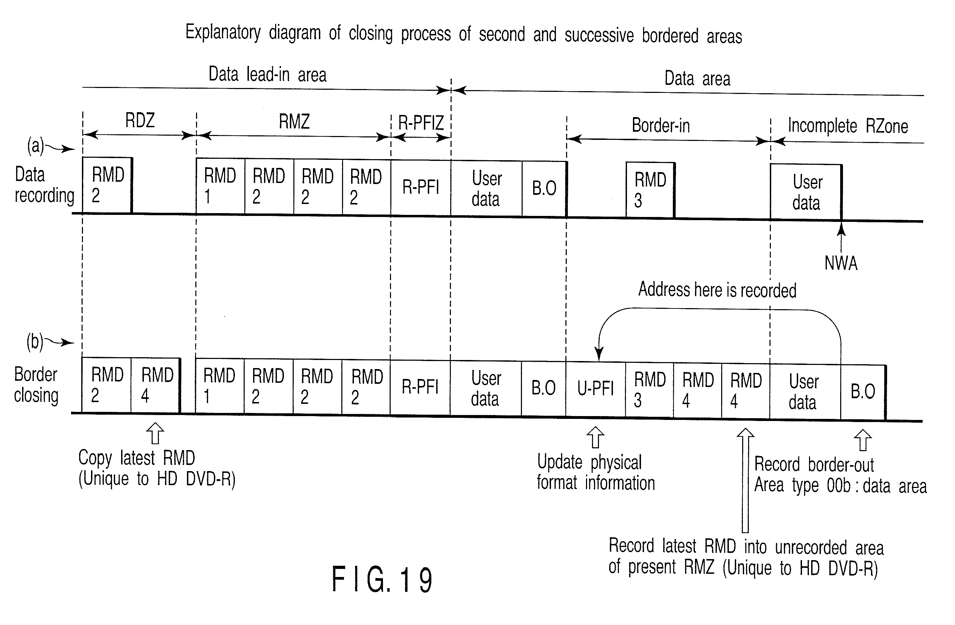

FIG. 19 is a diagram for illustrating a closing process for second and successive bordered areas in the information recording and reproducing apparatus in the present embodiment. As shown in (a) of FIG. 19, a case wherein a border closing operation is performed while user data is recorded in an incomplete R zone and the recording management data RMD3 is recorded in the border-in is explained. The last recording address NMW of the additionally recordable R zone is recorded in the updated physical format information U-PFI set in the border-in and latest recording management data RMD4 is repetitively recorded in the remaining portion of the border-in (unrecorded portion of the present recording management zone RMZ) ((b) of FIG. 19). Then, the latest recording management data RMD4 is copied into the RMD duplication zone RDZ. The border-out is recorded outside the user data. Area type information of the border-out is 00b: data area.

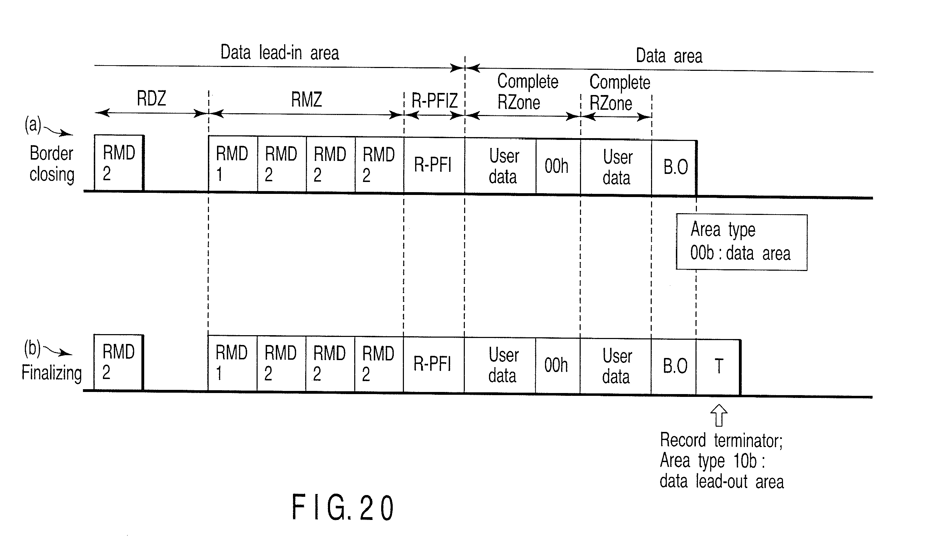

FIG. 20 is a diagram for illustrating a processing method in a case where the finalizing process (finalize) is performed after the bordered area is once closed in the information recording and reproducing apparatus in the present embodiment. As shown in (a) of FIG. 20, when a border closing process is performed, the R zone is completed. As shown in (b) of FIG. 20, a terminator is recorded outside the border-out in the end of the data area. Area type information of the terminator is 10b: data lead-out area.

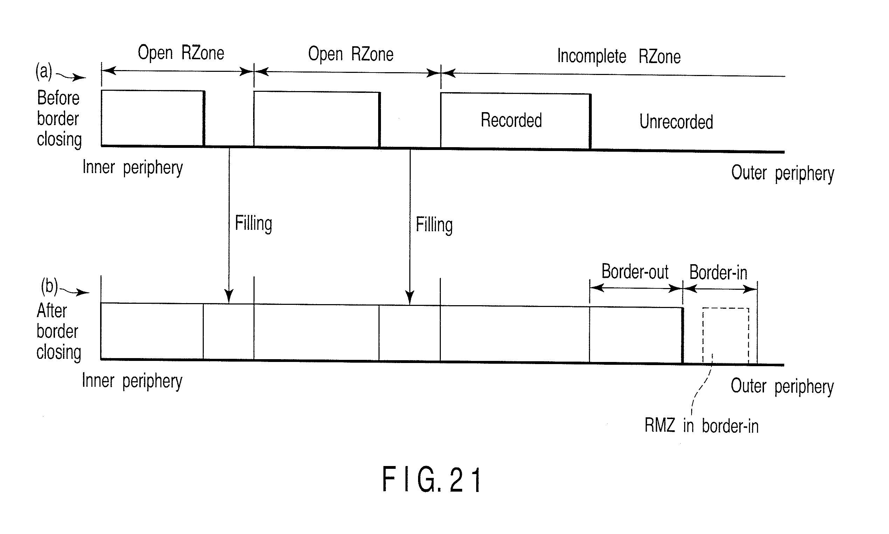

FIG. 21 is a diagram for illustrating the principle of the extended recording management zone ExRMZ recorded in the border-in in the present embodiment. As shown in (a) of FIG. 21, a case wherein a border closing operation is performed while three R zones are set is explained.

The R zone is used by the drive to manage the recording position of the user data separately from the file system in order to maintain the physically continuous state of the write once read many medium. A portion reserved for recording user data in the data recordable area is called an R zone. The R zone is divided into two types according to the recording state. The open (open type) R zone is used to additionally record additional data. In a complete (completely closed type) R zone, no more additional data can be additionally recorded. Up to two open R zones can be set. A portion reserved for recording user data in the data recordable area is called an invisible (non-specified state) R zone. The successive R zones are reserved in the invisible R zone. If data is no more additionally recorded, the invisible R zone does not exist. That is, up to three R zones can be set at the same time. In the open R zone, the start address and last address of the zone are both set. However, in the invisible R zone, the start address is set, but the last address is not set.

When the border is closed, as shown in (b) of FIG. 21, an unrecorded portion of the first and second R zones (open R zones) (which are called first, second, third zones from the inner peripheral side) is filled with "00h" and the border-out is recorded outside the recording data of the third R zone (incomplete R zone). The border-in is recorded outside the border-out and the extended recording management zone ExRMZ is recorded therein.

The recording management data RMD can be updated by 392 times or more (16384 times) by using the extended recording management zone ExRMZ of the border-in. However, the border must be closed before using the extended recording management zone ExRMZ of the border-in and it takes a long time.

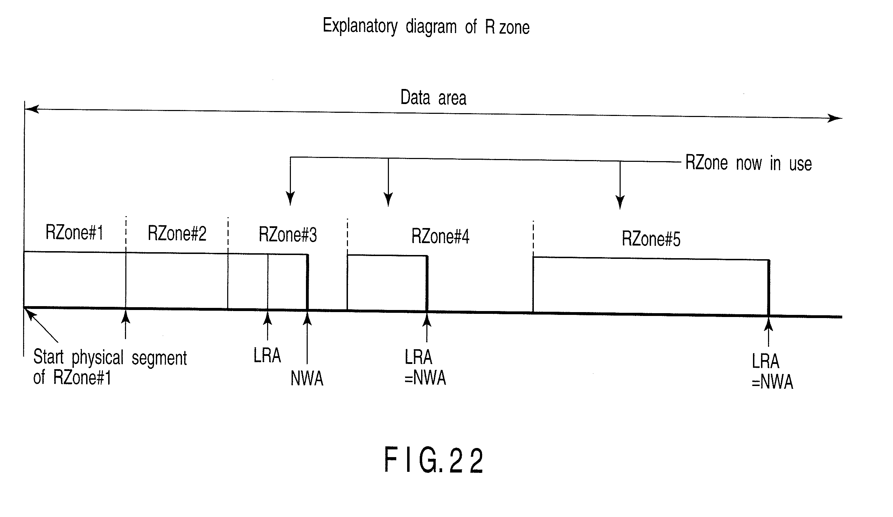

FIG. 22 is an explanatory diagram of the R zone in the present embodiment. The drive manages the recording position of the user data separately from the file system in order to maintain the physically continuous state for reproduction of the write once read many medium. The drive manages the recording position in the R zone unit and the following information items are sequentially held as the recording management data RMD in the disk.
- The number of the additionally recordable R zone which is now used:
- The start physical segment number of the R zone:
- The last recorded position LRA (last recorded address):

The number of additionally recordable R zones is always up to three. In the example of FIG. 22, three R zones of R zone #3, R zone #4 and R zone #5 are additionally recordable R zones. The additionally recording operation is performed starting from the last recorded position NWA (next writable address) of the additionally recordable R zone. If the additionally recording operation is completed, the last recorded address LRA becomes equal to the last recorded address NWA. Since the R zone #1, R zone #2 have no unrecorded area, no more additional data can be additionally recorded and they are complete R zones.

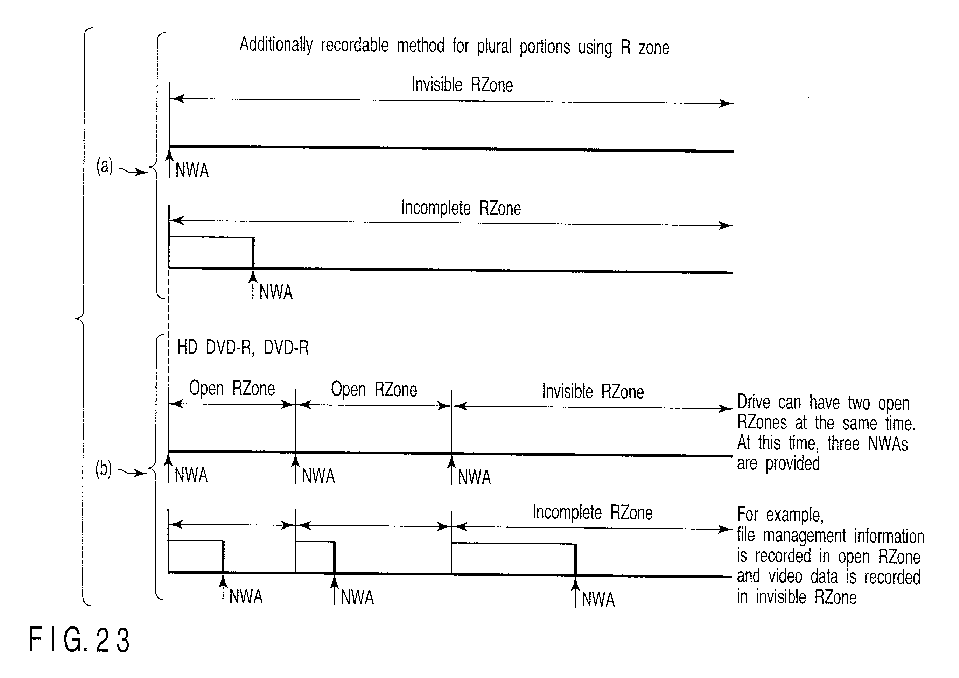

FIG. 23 is a conceptual explanatory diagram for illustrating a method capable of additionally recording a plurality of portions at the same time by use of the R zones in the present embodiment. The basic recording method is shown in (a) of FIG. 23, an R zone is not reserved and data is sequentially recorded starting from one address NWA of the incomplete R zone or invisible R zone. The incomplete R zone is similar to the invisible R zone in that the last address is not set. However, data is not recorded at all in the invisible R zone and the last recorded address NWA is the start address. On the other hand, in the incomplete R zone, data is recorded to the intermediate portion thereof and the last recording address NWA is shifted from the start address.

Like the conventional DVD-R, an example shown in (b) of FIG. 23 indicates a case wherein recording from a plurality of addresses is supported. The drive can simultaneously set one invisible R zone and two open R zones. Therefore, three last recorded addresses NWA of the R zones are provided. For example, file management information can be recorded in the open R zone and video data can be recorded in the invisible R zone. If video data is recorded, the last recorded address NWA of the invisible R zone is shifted from the start address and it becomes equal to the incomplete R zone.

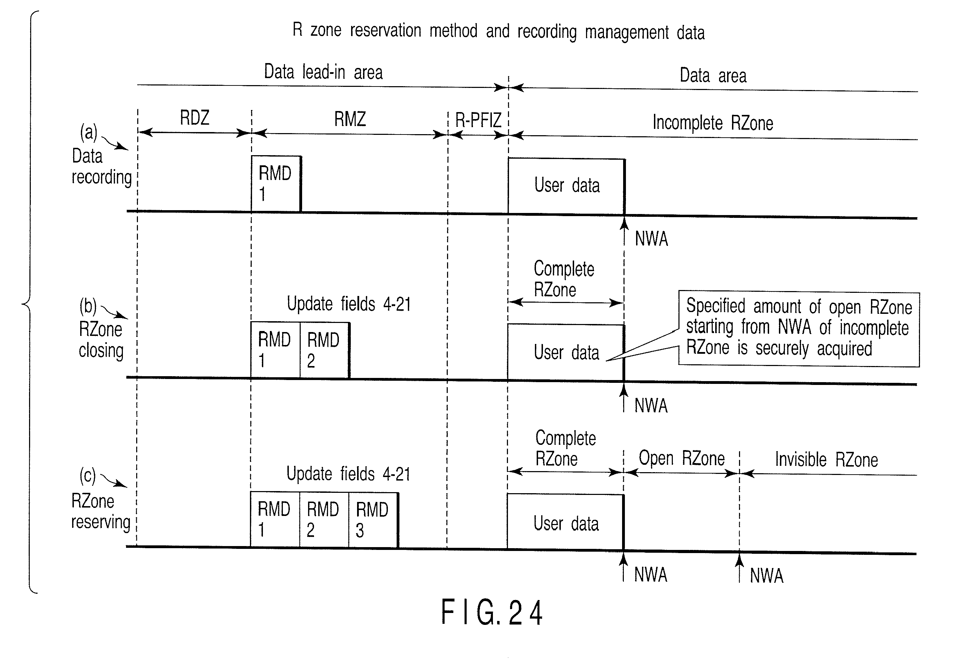

FIG. 24 is a diagram for illustrating the relation between the R zone setting method and the recording management data RMD in the information recording and reproducing apparatus of the present embodiment. As shown in (a) of FIG. 24, it is assumed that no open R zone is set in the data area and only the incomplete R zone exists. The recording management data RMD1 of the incomplete R zone is recorded in the recording management zone RMZ. A case wherein video data is recorded in the incomplete R zone and then management information is recorded in another zone is explained. First, as shown in (b) of FIG. 24, the incomplete R zone is converted into a complete R zone in order to close the R zone. That is, the last address of the user data is set as the last address of the R zone. Recording management data RMD2 of the complete R zone (update the fields 4 to 21 of RMD) is additionally recorded in the recording management zone RMZ. As shown in (c) of FIG. 24, an open R zone with preset size is set (reserved) outside the complete R zone and a portion lying outside the open R zone is set as an invisible R zone. Recording management data RMD3 of the invisible R zone and open R zone is additionally recorded in the recording management zone RMZ.

As will be described later, the open R zone is reserved also when the recording management zone RMZ is extended.

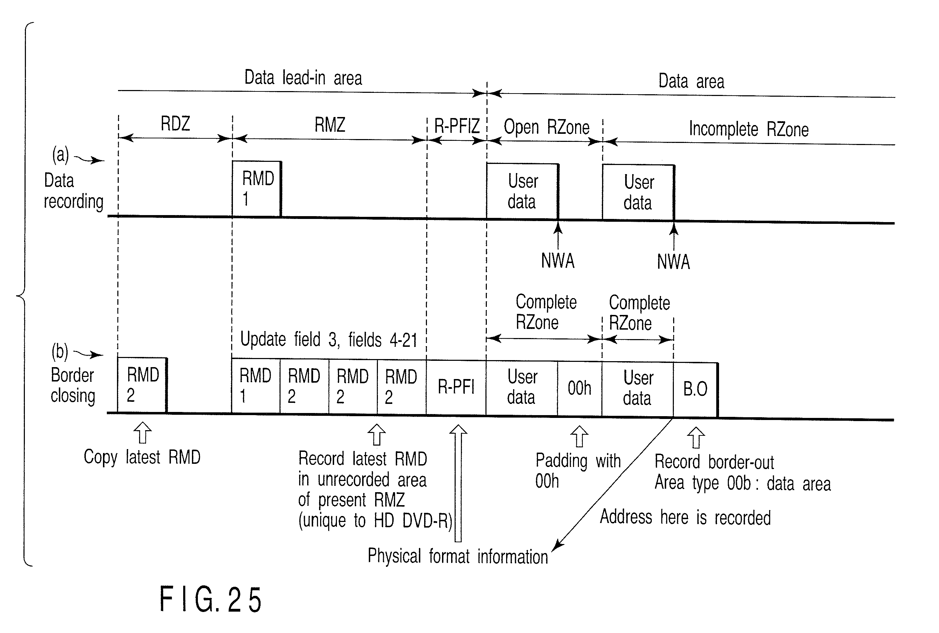

FIG. 25 is a diagram for illustrating the relation between the R zone and the recording management data RMD when the first bordered area is closed. As shown in (a) of FIG. 25, it is assumed that the open R zone and incomplete R zone are set in the data area. The recording management data RMD1 is recorded in the recording management zone RMZ. At the border closing time, as shown in (b) of FIG. 25, "00h" is filled in the unrecorded area of the open R zone to make a complete R zone, the incomplete R zone is converted into a complete R zone and a border-out area is set outside the complete R zone. The recording management data RMD2 of the complete R zone and border-out (update the fields 3, 4 to 21 of RMD) is additionally recorded in the recording management zone RMZ and the latest RMD2 is copied in the RMD duplication zone RDZ. The area type of the border-out is 00b: data area. The start address of the border-out is recorded in the updated physical format information R-PFI. The border closing operation is performed to fill the unrecorded portion with recording data in order to make it possible to reproduce information on the write once read many medium by use of the player. Therefore, the unrecorded area of the recording management zone RMZ is filled with latest RMD2.

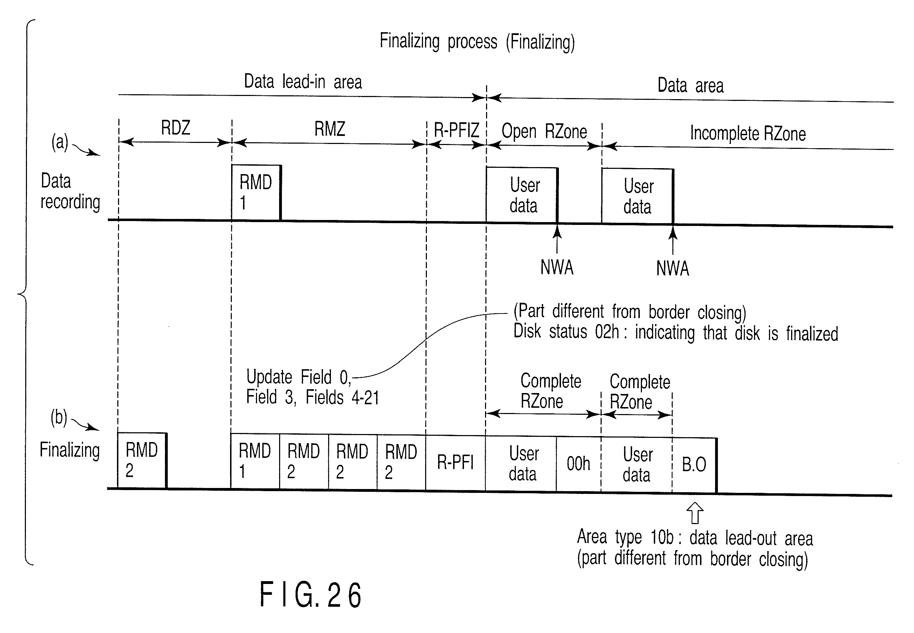

FIG. 26 is an explanatory diagram for illustrating the finalizing process (finalize) in the information recording and reproducing apparatus of the present embodiment. The difference between the border closing process and the finalizing process lies in that a bordered area can be set (additionally recordable) again even after the border closing process, but the additional recording operation cannot be performed after the finalizing process.

The finalizing process in the present embodiment can be realized by partially changing the border closing process, and therefore, time for the finalizing process can be shortened. The finalizing process of FIG. 26 is different from the border closing process of FIG. 25 in that the area type of the border-out is set to 10b: data lead-out area and the disk status of the field 0 of the recording management data RMD2 is set to 02h: which indicates that "the disk is finalized".

That is, the border-out is set in the data area so as to set the border-in again in the case of the border closing process. On the other hand, the border-out is set as the data lead-out area so as to close the data area in the case of the finalizing process. At the same time, the disk status of the field 0 of the recording management data RMD2 is set to 02h to indicate the finalizing process of the disk. Thus, it is not necessary to fill data into the unrecorded area of the data area in order to finalize the disk by changing the unrecorded area of the data area into the data lead-out area and time for the finalizing process can be shortened.

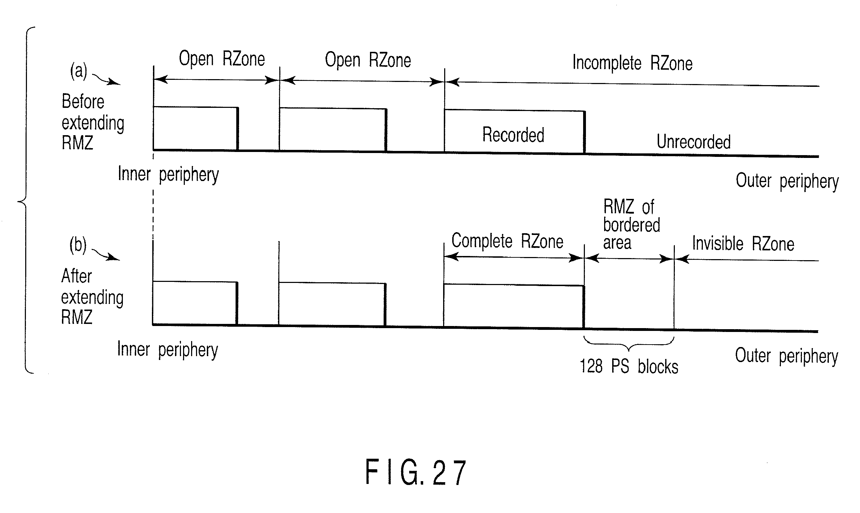

FIG. 27 is a principle explanatory diagram for illustrating a method of setting the extended recording management zone ExRMZ using the R zone in the present embodiment. In this case, (a) of FIG. 27 is the same as (a) of FIG. 21. A request for extending the recording management zone RMZ without closing the border is issued in some cases. In this case, as shown in (b) of FIG. 27, the incomplete R zone is changed into a complete R zone, a bordered area (128 physical segment blocks) is set outside the complete R zone and an extended recording management zone RMZ is set therein.

A portion outside the bordered area is an invisible R zone. In this case, if data "00h" is filled in the unrecorded area of the open R zone, it becomes unnecessary to set the border-out adjacent to the complete R zone.

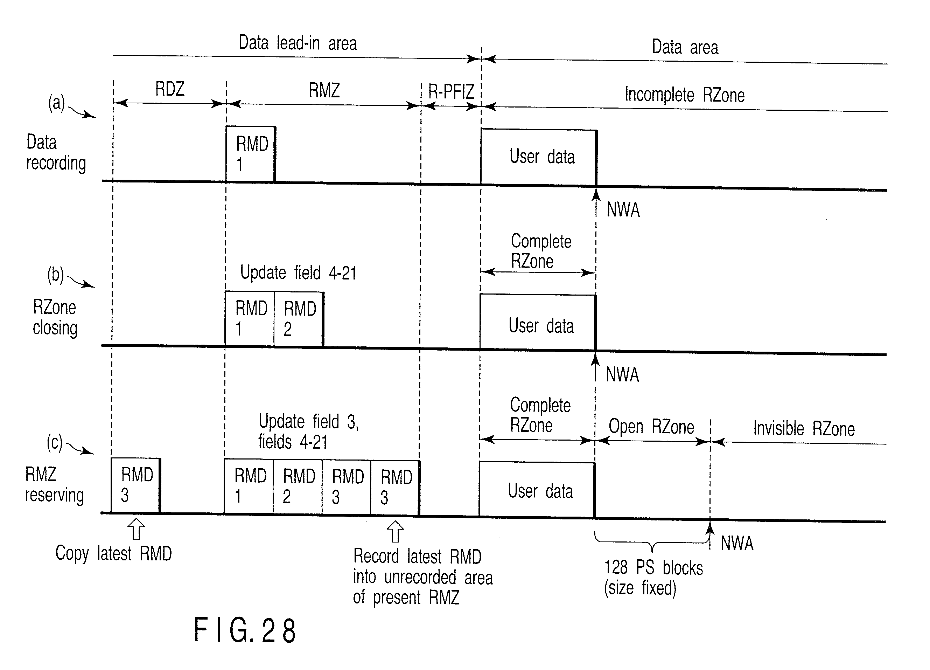

FIG. 28 is an explanatory diagram for illustrating the relation between the newly set extended recording management zone ExRMZ using the R zone and the recording management data RMD in the present embodiment. If the remaining amount of the recording management zone RMZ becomes smaller than a preset amount, the recording management zone RMZ can be extended. As shown in (a) of FIG. 28, an incomplete R zone is set in the data area and user data is recorded therein. Recording management data RMD of the user data is recorded in the recording management zone RMZ. At the R zone closing time, as shown in (b) of FIG. 28, the incomplete R zone is converted into a complete R zone. That is, the last address of the user data is set as the last address of the R zone. Then, recording management data RMD2 of the complete R zone (update the fields 4 to 21 of RMD) is additionally recorded in the recording management zone RMZ. As shown in (c) of FIG. 28, an open recording management zone RMZ of preset size (128 physical segment blocks) is reserved (set) outside the complete R zone and a portion outside the open recording management zone RMZ is used as an invisible R zone. The recording management data RMD3 (updating of the fields 3, 4 to 21 of RMD) of the invisible R zone and open recording management zone RMZ is additionally recorded in the unrecorded area of the recording management zone RMZ, and at the same time, RMD3 is copied into the RMD duplication zone RDZ.

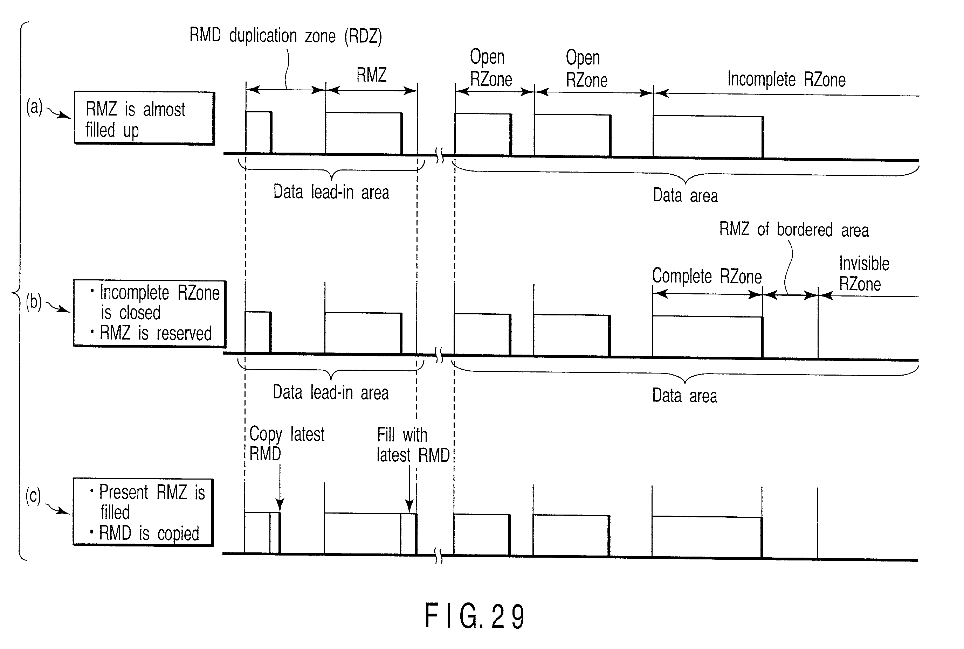

FIG. 29 is a conceptual explanatory diagram for illustrating a processing method when an existing recording management zone RMZ becomes full in the same bordered area. As shown in (a) of FIG. 29, when the recording management zone RMZ of the data lead-in area becomes almost full, the incomplete R zone is converted into a complete R zone like the case of (b) of FIG. 27 as shown in (b) of FIG. 29. Then, a bordered area (128 physical segment blocks) is set outside the complete R zone and an extended recording management zone ExRMZ is set therein. A portion outside the bordered area is an invisible R zone. After this, as shown in (c) of FIG. 29, the unrecorded area of the recording management zone RMZ is filled with the latest recording management data RMD and the latest recording management data RMD is copied into the RMD duplication zone RDZ.

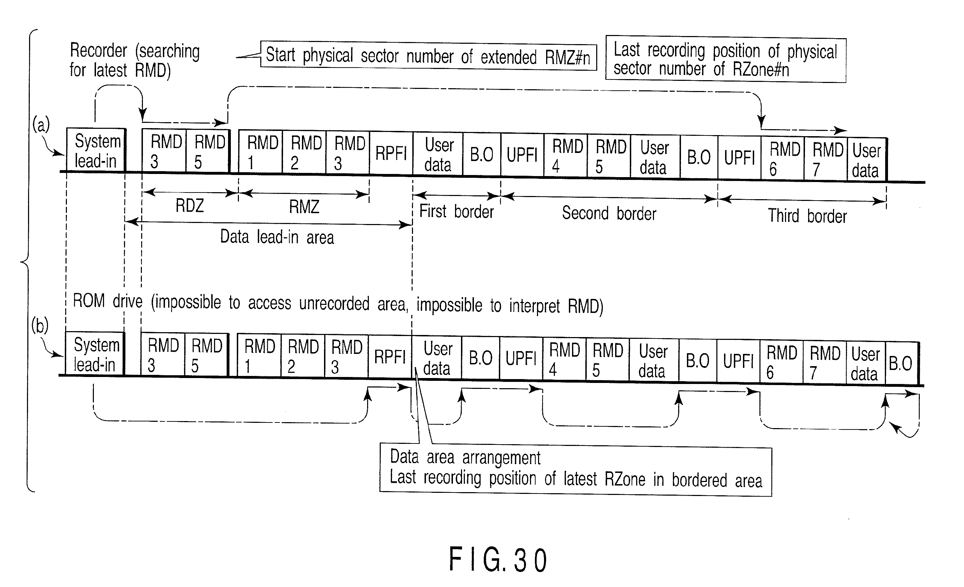

FIG. 30 is an explanatory diagram for illustrating a recording position detecting method of the latest recording management data RMD using the RMD duplication zone RDZ in the information reproducing apparatus or information recording and reproducing apparatus of the present embodiment.

A case where the recorder searches for the latest recording management data RMD7 is shown in (a) of FIG. 30. RMD duplication zone (RDZ) of the data lead-in area is detected based on data of the control data zone in the system lead-in area and the recording management data RMD is traced. Since the start physical segment number of the extended recording management zone RMZ is recorded therein, the latest recording management data RMD7 of the extended recording management zone RMZ in the third border can be detected.

As shown in (b) of FIG. 30, the ROM drive cannot make access to the unrecorded area and interpret the recording management data RMD.

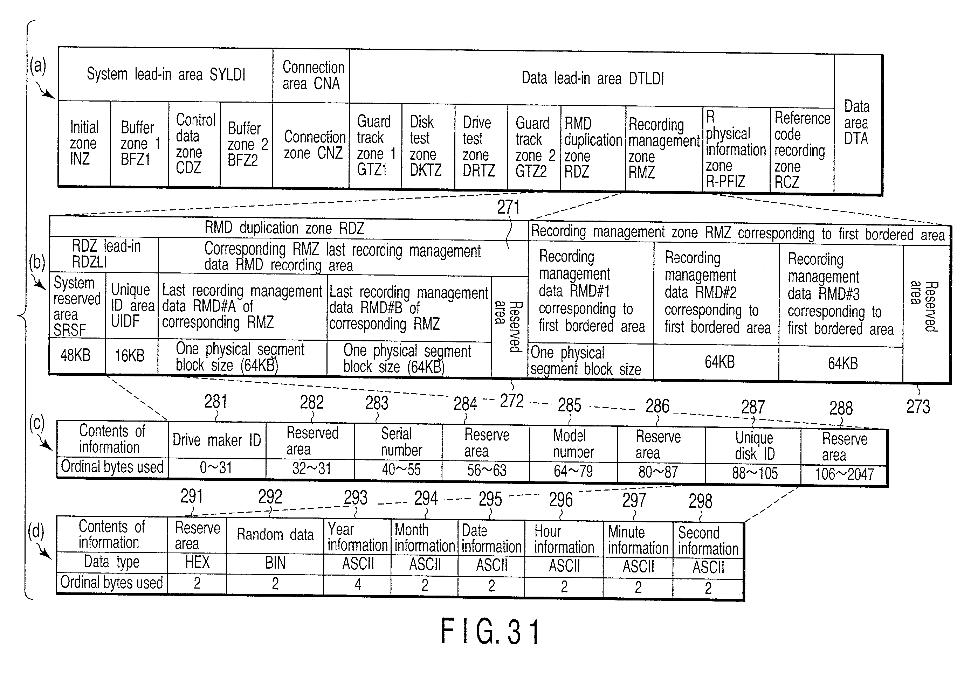

Further, the data structures of the respective portions are explained in detail although the explanation thereof may be partly redundant. FIG. 31 shows the data structure of the recording management zone RMZ and RMD duplication zone RDZ in the write once read many information storage medium. The same portion as that shown in FIG. 11 is shown in (a) of FIG. 31 and an enlarged diagram of the recording management zone RMZ and RMD duplication zone RDZ in FIG. 11 is shown in (b) of FIG. 31. As described above, data relating to the recording management corresponding to the first bordered area BRDA is collectively recorded in one recording management data RMD in the recording management zone RMZ of the data lead-in area DTLDI. The data is sequentially and additionally recorded as new recording management data RMD in the latest portion thereof each time the contents of the recording management zone RMZ generated when the additional recording process into the write once read many information storage medium is performed are updated.

That is, the recording management data RMD is recorded in the unit of size of one physical segment block (the physical segment block will be explained in detail later) and is sequentially and additionally recorded as new recording management data RMD in the last portion thereof each time the data contents are updated.

In an example shown in (b) of FIG. 31, a case wherein management data is changed while recording management data items RMD#1, RMD#2 are previously recorded, and therefore, data after changing (after updating) is recorded as recording management data RMD#3 immediately after the recording management data RMD#2 is shown. Therefore, a reserved area 273 is provided so that data can be additionally recorded in the recording management zone RMZ.

The structure of the recording management zone RMZ existing in the data lead-in area DTLDI is shown in (b) of FIG. 31, but this is not limitative and the structure of the recording management zone RMZ (or an extended recording management zone: which is called an extended RMZ) in the bordered area BRDA or border-in BRDI can be used as the structure shown in (b) of FIG. 31.

In the present embodiment, a process of filling the entire portion of the reserved area 273 shown in (b) of FIG. 31 with the last recording management data RMD is performed when the first bordered area BRDA#1 is closed or the finalizing process (finalize) for the data area DTA is performed. As a result, the following effects (1) to (3) can be attained.
(1) The reserved area 273 of "unrecorded state" disappears and it is ensured that the tracking correction operation by the DPD (Differential Phase Detection) method can be stabilized.
(2) The last recording management data RMD is overwritten in the reserved area 273 and the reliability at the time of reproduction associated with the last recording management data RMD is markedly enhanced.
(3) Occurrence of an accident caused by erroneously recording different recording management data RMD in the reserved area 273 of the unrecorded state can be prevented.

The above processing method is not limited to the recording management zone RMZ in the data lead-in area DTLDI. In the present embodiment, when the corresponding bordered area BRDA is closed or the finalizing process (finalize) of the data area DTA is performed for the recording management zone RMZ (or an extended recording management zone: which is called an extended RMZ) in the bordered area BRDA or border-in BRDI, a process of filling the entire portion of the reserved area 273 with the last recording management data RMD is performed.

The RMD duplication zone RDZ is divided into an RDZ lead-in area RDZLI and a recording area 271 of the corresponding RMZ last recording management data RMD. As shown in (b) of FIG. 31, the RDZ lead-in RDZLI is configured by a system reservation area SRSF with the data size of 48 kB and a unique ID area UIDF with the data size of 16 kB. "00h" is fully set in the system reservation area SRSF.

In the present embodiment, the RDZ lead-in RDZLI is recorded in the additionally recordable data lead-in area DTLDI. In the write once read many information storage medium of the present embodiment, a product is shipped with the RDZ lead-in RDZLI set in the unrecorded state immediately after the product is manufactured. Information of the RDZ lead-in RDZLI is recorded for the first time when the write once read many information storage medium is used in the information recording and reproducing apparatus on the user side. Therefore, information indicating that a target write once read many information storage medium is set in a state immediately after manufacturing or shipping or it is used at least once can be easily attained by determining whether or not information is recorded in the RDZ lead-in RDZLI immediately after the write once read many information storage medium is mounted on the information recording and reproducing apparatus.

The arrangement structure of the areas shown in (b) of FIG. 31 is a structure which causes time for collecting necessary information to be shortened.

As shown in (c) of FIG. 31, information relating to the information recording and reproducing apparatus which uses the write once read many information storage medium immediately after shipping (starting to record information) for the first time is recorded in the unique ID area UIDF. That is, a drive maker ID 281, serial number 283 and model number 284 of the information recording and reproducing apparatus are recorded. The same information of 2 kB (specifically, 2048 bytes) shown in (c) of FIG. 31 is repeatedly recorded eight times in the unique ID area UNIDF. As shown in (d) of FIG. 31, year information 293, month information 294, date information 295, hour information 296, minute information 297 and second information 298 when an information storage medium is first used (information starts to be recorded) are recorded in the unique disk ID 287. As is described in (d) of FIG. 31, the data types of the respective information items are described as HEX, BIN, ASCII and the number of bytes used is two bytes or four bytes.

The size of the area of the RDZ lead-in RDZLI and the size of one recording management data RMD are 64 kB, that is, they are integral multiples of the user data size of one ECC block. In the case of the write once read many information storage medium, a process of rewriting data of the ECC block which has been changed into the information storage medium after part of the data of one ECC block was changed cannot be performed. Therefore, particularly, in the case of the write once read many information storage medium, information is recorded in the recording cluster unit configured by the integral multiple of the data segment containing one ECC block. The recording efficiency can be prevented from being lowered by setting the size of the area of the RDZ lead-in RDZLI and the size of one recording management data RMD to an integral multiple of 64 kB as in the present embodiment.

Next, the recording area 271 for the corresponding RMZ last recording management data RMD in (b) of FIG. 31 is explained. A method for recording intermediate information in the lead-in area at the time of interruption of recording is provided. In this case, it is necessary to sequentially and additionally record intermediate information (recording management data RMD in the present embodiment) in the area each time the recording process is interrupted or the additionally recording process is performed. Therefore, if the recording interruption operation or the additionally recording process is frequently and repeatedly performed, a problem that the area instantly becomes full and a further additionally recording process cannot be performed occurs.

In order to solve the above problem, the present embodiment has a feature that an RMD duplication zone RDZ is set as an area in which updated recording management data RMD can be recorded and recording management data RMD which is thinned out in a specified condition is recorded only when the specified condition is satisfied.

Thus, the RMD duplication zone RDZ is prevented from becoming full by lowering the frequency of the additionally recording operations of the recording management data RMD in the RMD duplication zone RDZ and the effect that the number of additionally recordable times for the write once read many information storage medium can be markedly enhanced can be attained.

In parallel with this, the recording management data RMD updated for each additional recording is additionally recorded in the recording management zone RMZ in the border-in BRDI (in the data lead-in area DTLDI as indicated in (a) of FIG. 31 with respect to the first bordered area BRDA#1) or the recording management zone RMZ utilizing the R zone.

Then, the last recording management data RMD (the latest recording management data RMD in a state set up immediately before a new recording management zone RMZ is formed) is recorded in the RMD duplication zone RDZ (in the corresponding last recording management data RMD recording area 271 of the duplication zone RDZ) when a new recording management zone RMZ is formed, for example, when a next bordered area BRDA is formed (new border-in BRDI is set) or a new recording management zone RMZ is set in the R zone. As a result, the number of additionally recording operations for the write once read many information storage medium can be markedly increased and the effect that the latest RMD position searching process can be easily performed by utilizing the area can be attained.

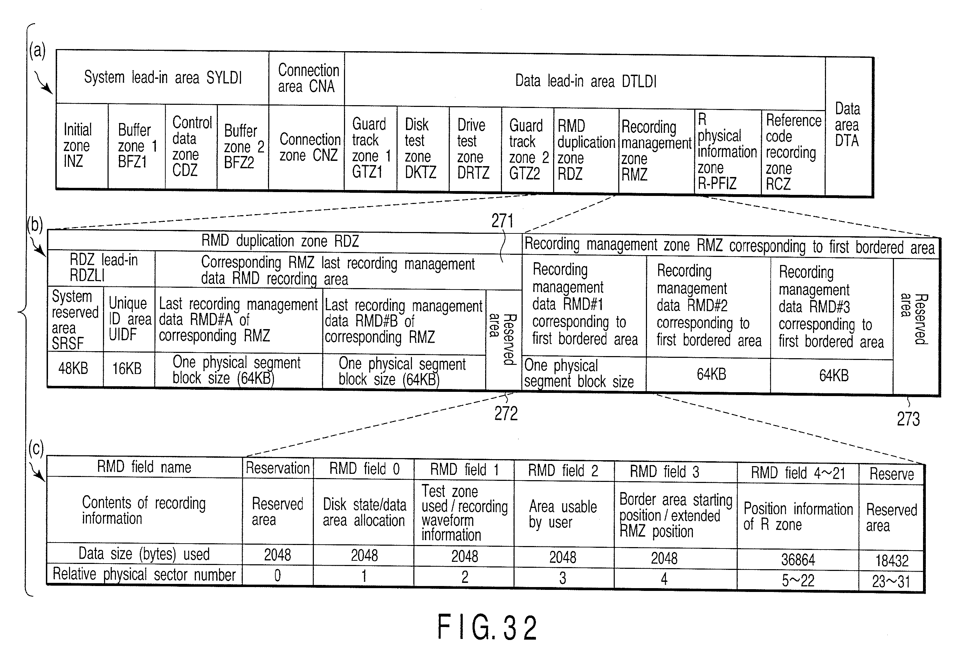

FIG. 32 shows the data structure of the recording management data RMD shown in FIG. 31. The contents of (a), (b) of FIG. 32 are the same as those of (a), (b) of FIG. 31. As described before, in the present embodiment, since the border-in BRDI for the first bordered area BRDA#1 is partially used as the data lead-in area DTLDI, recording management data items RMD#1 to RMD#3 corresponding to the first bordered area are recorded in the recording management zone RMZ in the data lead-in area DTLDI.

In a case where data is not recorded at all in the data area DTA, the entire portion of the recording management zone RMZ is the reserved area 273 set in the unrecorded state. Each time data is additionally recorded in the data area DTA, updated recording management data RMD is recorded in a first location of the reserved area 273 and recording management data RMD corresponding to the first bordered area in the recording management zone RMZ is sequentially recorded. The size of the recording management data RMD additionally recorded for each time in the recording management zone RMZ is set to 64 kbytes. Further, since one ECC block is configured by 64-kB data in the present embodiment, the additionally recording process can be simplified by setting the data size of the recording management data RMD to correspond to one ECC block size.

In the present embodiment, portions of guard areas are added the front and rear portions of one ECC block to configure one data segment and an extended guard field is added to one or more (n) data segments to configure a recording cluster of an additionally recording or rewriting unit.

When the recording management data RMD is recorded, the recording management data RMD is sequentially and additionally recorded as the recording cluster containing only one data segment (one ECC block) in the recording management zone RMZ.

The data structure of one recording management data RMD#1 is shown in (c) of FIG. 32. In (c) of FIG. 32, the data structure of the recording management data RMD#1 in the data lead-in area DTLDI is shown. However, this is not limitative and recording management data items RMD#A, RMD#B ((b) in FIG. 31) recorded in the RMD duplication zone, (extended) recording management data RMD recorded in the border-in BRDI, (extended) recording management data RMD recorded in the R zone and a copy (CRMD) of RMD recorded in the border-out BRDO have the same structure.

As shown in (c) of FIG. 32, one recording management data RMD is configured by a reserved area and RMD fields of "0" to "21". Each RMD field is allocated for every 2048 bytes in accordance with the user data size recorded in one physical sector and a relative physical sector number is attached thereto. RMD fields are recorded on the write once read many information storage medium in the order of the relative physical sector number. The outline of the data contents recorded in each RMD field is as follows:
- RMD field 0 ... Information relating to the disk state and data area allocation (information associated with the arrangement location of various data items in the data area):
- RMD field 1 ... Information relating to the test zone used and information relating to the recommended recording waveform:
- RMD field 2 ... An area which can be used by the user:
- RMD field 3 ... Start position information of the border area and information relating to the extended RMZ position:
- RMD fields 4 to 21 ... Information relating to the position of the R zone:

As shown in FIG. 11, drive test zones DRTZ are provided in two locations of the inner peripheral side and outer peripheral side of the write once read many information storage medium. As the number of trial writing operations in the drive test zone DRTZ is larger, an optimum recording condition can be detected more in detail by finely allocating parameters and the precision of recording into the data area DTA is enhanced. In the rewritable information storage medium, the contents of the drive test zone DRTZ can be used again by overwriting, but if an attempt is made to increase the number of trial writing operations so as to enhance the recording precision in the write once read many information storage medium, a problem that the drive test zone DRTZ is instantly used up occurs. In order to solve the problem, in the present embodiment, an extended drive test zone EDRTZ can be sequentially set in a direction from the outer peripheral portion to the inner peripheral portion and the drive test zone can be extended.

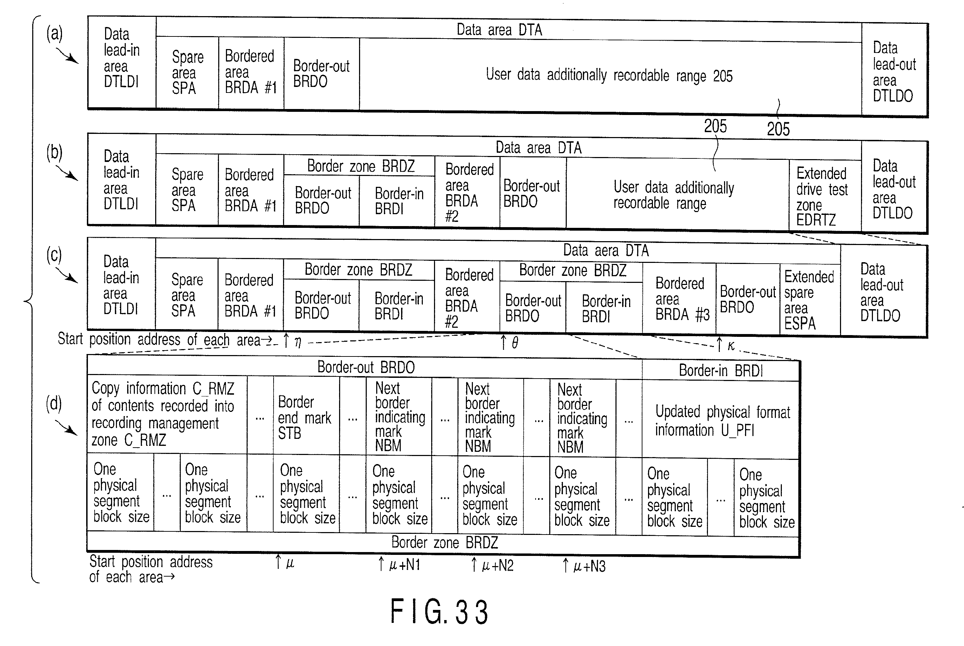

The structure of the border area in the write once read many information storage medium is further explained with reference to FIG. 33. When one border area is set in the write once read many information storage medium for the first time, a bordered area BRDA#1 is set on the inner peripheral side (on the side closest to the data lead-in area DRLDI) and then the border-out BRDO is formed thereafter as shown in (a) of FIG. 33.

Further, when it is desired to set a next bordered area BRDA#2, a next (#1) border-in BRDI is formed after the previous (#1) border-out BRDO as shown in (b) of FIG. 33 and then a next bordered area BRDA#2 is set. When it is desired to close the next bordered area BRDA#2, a (#2) border-out BRDO is formed immediately after the above area. In the present embodiment, a state in which the next (#1) border-in BRDI is formed after the previous (#1) border-out BRDO and combined with the previous (#1) border-out BRDO is called a border zone BRDZ. The border zone BRDZ is set to prevent the optical head from overrunning between the bordered areas BRDA when information is reproduced by use of the information reproducing apparatus (based on the DPD detection method). Therefore, when the write once read many information storage medium on which information is recorded is reproduced by use of the reproduce-only apparatus, it is assumed that both of the border-out BRDO and border-in BRDI are already recorded and a border closing process of recording the border-out BRDO after the last bordered area BRDA is performed. It is necessary to configure the first bordered area BRDA#1 by 4080 or more physical segment blocks and set the width of the first bordered area BRDA#1 in the radius direction on the write once read many information storage medium to 1.0 mm or more. An example in which an extended drive test zone EDRTZ is set in the data area DTA is shown in (b) of FIG. 33.

The state obtained after the write once read many information storage medium is finalized is shown in (c) of FIG. 33. In the example shown in (c) of FIG. 33, a case wherein the extended drive test zone EDRTZ is incorporated into the data lead-out area DTLDO and an extended spare area ESPA is already set is shown. In this case, the area is filled with the last border-out BRDO so that an additional recordable range 205 of user data will not be left behind.

The detail data structure in the border zone BRDZ described above is shown in (d) of FIG. 33. Each information is recorded in the size unit of one physical segment block which will be described later. Copy information C RMZ of the contents recorded in the recording management zone is recorded into a first portion of the border-out BRDO and a border end mark (Stop Block) STB indicating the border-out BRDO is recorded therein. Further, when a next border-in BRDI is present, a first mark (Next Border Marker) NBM indicating that a border area is provided to follow an "N1st" physical segment block counted from the physical segment block in which the border end mark (Stop Block) STB is recorded, a second mark NBM indicating that a border area is provided to follow an "N2nd" physical segment block and a third mark NBM indicating that a border area is provided to follow an "N3rd" physical segment block are discretely recorded in three portions for each size of one physical segment block. Updated physical format information U_PFI is recorded in the next border-in BRDI.

In the present DVD-R or DVD-RW disk, if the next border area is not present (in the last border-out BRDO), the location (the location of one physical segment block size) in which "the mark NBM indicating the next border" shown in (d) of FIG. 33 is recorded is kept held as "the location in which data is not recorded at all". In this state, if the border closing operation is performed, the write once read many information storage medium (the present DVD-R or DVD-RW disk) is set into a state in which it can be reproduced by use of the conventional DVD-ROM drive or conventional DVD player. With the conventional DVD-ROM drive or conventional DVD player, a track shifting detecting method is performed by use of a DPD (Differential Phase Detect) method using a recording mark recorded on the write once read many information storage medium (the present DVD-R or DVD-RW disk). However, since no recording mark is present over one physical segment block size in the above "location in which data is not recorded at all", the track shifting detecting method using the DPD (Differential Phase Detect) method cannot be performed. As a result, there occurs a problem that a stable track servo operation cannot be performed. In the present embodiment, in order to solve the above problem relating to the present DVD-R or DVD-RW disk, the following methods are newly adopted.
(1) If a next border area is not present, data of a specified pattern is previously recorded in "the location in which a mark NBM indicating the next border is recorded":
(2) If a next border area is present, identification information indicating that "the next border area is present" is utilized by partially and discretely performing the "overwriting process" by use of a specified recording pattern in the location of "the mark NBM indicating the next border" in which data of the specified pattern is previously recorded:
   By thus setting the mark indicating the next border by overwriting, a recording mark of a specified pattern can be previously formed in "the location in which the mark NBM indicating the next border is recorded" even when the next border area does not appear as shown in the method (1). At this time, the effect that a stable track servo operation can be performed even if the track shifting detecting method is performed by using the DPD method in the reproduce-only information reproducing apparatus after a border closing operation can be attained. In the write once read many information storage medium, if a recording mark is newly overwritten even partially on a portion in which a recording mark is already recorded, there occurs a possibility that stabilization of the PLL circuit shown in FIG. 1 is lost in the information recording and reproducing apparatus or information reproducing apparatus. In order to cope with this problem, the following methods are further adopted in the present embodiment.
(3) A method of changing the overwriting state according to the location in the same data segment when data is overwritten in a position of "the mark NBM indicating the next border" of one physical segment block size:
(4) A method of partially overwriting data in sync data and inhibiting overwriting data on the sync code:
(5) A method of overwriting data in a location other than data ID and IED:

By partially overwriting data in the sync data other than the sync code, the data ID position can be detected by using the sync code in "the mark NBM indicating the next border" and information recorded in the data ID can be reproduced (the contents thereof can be determined).

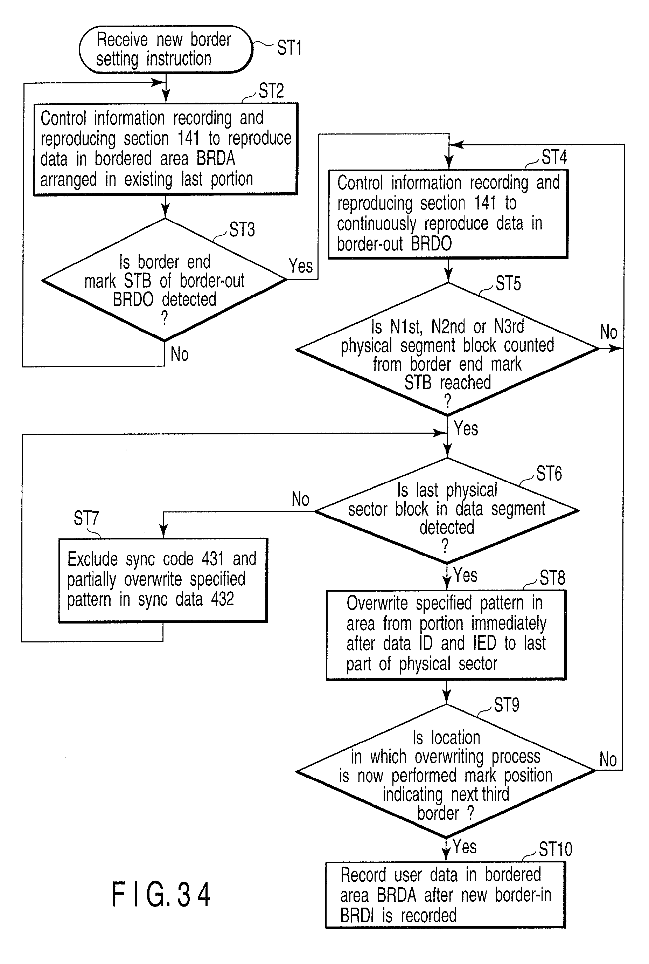

A flowchart showing a method of overwriting in the location of "the mark NBM indicating the next border", for illustrating the above contents in detail is shown in FIG. 34. When the control section 143 of the information recording and reproducing apparatus shown in FIG. 1 receives a new border setting instruction via the interface section 142 (ST1), the control section 143 controls the information recording and reproducing section 141 and starts to reproduce data in the bordered area BRDA arranged in the last portion (ST2). The information recording and reproducing section 141 continuously traces the pre-groove in the bordered area BRDA while performing the tracking operation until the border end mark STB in the border-out BRDO is detected (ST3). As shown in (d) of FIG. 33, a mark NBM indicating the next border recorded by use of a specified pattern is already arranged in the N1st, N2nd, N3rd physical segment blocks after the border end mark STB. The information recording and reproducing section 141 continuously reproduces data in the border-out BRDO (ST4), counts the number of physical segment blocks and detects the position of "the mark NBM indicating the next border" (ST5). As described above, as a concrete example of "the method (3) of changing the overwriting state according to the location in the same data segment", the overwriting range at least in the last physical sector in the same data segment is set large.

If the last physical sector in the data segment is detected (ST6), the overwriting process is performed from a portion immediately after the data ID and IED to the end of the last physical sector with the data ID and IED left behind (without overwriting a portion of the data ID and IED) (ST9). Further, the overwriting process is partially performed by use of a specified pattern (ST7) in the sync data by excluding an area of the sync code (SY0 to SY3) in a portion other than at least the last physical sector in the same data segment. The above process is performed for each "mark NBM indicating the next border" and when the overwriting process into the third "mark NBM indicating the next border" is terminated (ST9), user data is recorded in the bordered area BRDA (ST10) after a new border-in BRDI is recorded.

The logical recording unit of information recorded in the bordered area BRDA shown in (c) of FIG. 33 is called an R zone. Therefore, one bordered area BRDA is configured by at least one R zone. In the present DVD-ROM, a file system called a "UDF bridge" in which both of file management information in conformity with a UDF (Universal Disc Format) and file management information in conformity with IS09660 are simultaneously recorded in one information storage medium is used. In the file management method in conformity with ISO9660, there is a rule that one file must be continuously recorded in the information storage medium. That is, information in one file is inhibited from being divisionally arranged in discrete positions on the information storage medium. Therefore, for example, when information is recorded in conformity with the UDF bridge, the entire information items configuring one file are continuously recorded. Therefore, an area in which one file is continuously recorded may be formed to configure one R zone.

By the above means, useless movement of the pickup head of the information recording and reproducing section can be eliminated, the movement can be suppressed to a minimum, and therefore, time required for border closing or finalizing process can be shortened.

## Claims

1. An information recording method for a write once read many information storage medium which includes a data area and data lead-in area, the data lead-in area having an RMD duplication zone (RDZ), a recording management zone (RMZ) in which recording management data (RMD) containing at least a start position of a border area and last recording address is recorded and an R physical format information zone (R-PFIZ) in which physical format information (R-PFI) is recorded, an extended recording management zone (ExRMZ) being set in the data area, and information associated with the recording position of the extended recording management zone (ExRMZ) being recorded in the RMD duplication zone (RDZ), **characterized by** comprising:
recording latest recording management data (RMD) at least in the recording management data duplication zone (RDZ) of the data lead-in area in a first step (SA2) when performing one of a border closing process and finalizing process after the user data is recorded (SA1), and
performing a padding process for at least a discontinuous area of the data area (SA5) and recording a border-out in a last portion of an information recording position (SA6) in a second step.

2. The information recording method according to claim 1, **characterized by** further comprising recording the latest recording management data (RMD) in an unrecorded area of the present recording management zone (RMZ) (SA3), and recording R physical format information (R-PFI) in the R physical format information zone (R-PFIZ) in the first step (SA4).

3. The information recording method according to claim 1, **characterized by** further comprising recording updated physical format information (U-PFI) in an extended R physical format information zone (U-PFIZ) for updating (SB3) and recording latest recording management data (RMD) in an extended recording management zone (ExRMZ) in the second step (SB4) in a case where the extended R physical format information zone (U-PFIZ) is securely acquired in the data area and the extended recording management zone (ExRMZ) is also securely acquired.

4. The information recording method according to claim 1, **characterized by** further comprising recording R physical format information (R-PFI) in the R physical format information zone (R-PFIZ) in the first step (SC3) and recording latest recording management data (RMD) in an extended recording management zone (ExRMZ) in the second step (SC4) in a case where the extended recording management zone (ExRMZ) is securely acquired in the data area.

5. The information recording method according to claim 1, **characterized in that** a border-in is also used as the data lead-in area, a copy of common information of families of storage media and R physical format information (R-PFI) containing an outermost peripheral address of a first border are recorded in the data lead-in area in the first step.

6. An information recording and reproducing apparatus using an information storage medium which has a data area and data lead-in area, the data lead-in area having an RMD duplication zone (RDZ), a recording management zone (RMZ) in which recording management data (RMD) containing at least a start position and last recording address of a border area is recorded and an R physical format information zone (R-PFIZ) in which physical format information (R-PFI) is recorded, an extended recording management zone (ExRMZ) being set in the data area, and information associated with the recording position of the extended recording management zone (ExRMZ) being recorded in the RMD duplication zone (RDZ), **characterized by** comprising:
setting means for setting the extended recording management zone (ExRMZ) also in the data area,
recording means used for the data lead-in area side for recording latest recording management data (RMD) at least in the recording management data duplication zone (RDZ) of the data lead-in area (SA2) when performing one of a border closing process and finalizing process after the user data is recorded (SA1), and
recording means for performing a padding process for at least a discontinuous area of the data area (SA5) and used for the data area side for recording a border-out in a last portion of an information recording position (SA6).

7. The information recording and reproducing apparatus according to claim 6, **characterized in that** the recording means used for the data lead-in area side includes means for recording latest recording management data (RMD) into an unrecorded area of the present recording management zone (RMZ) (SA3), and means for recording R physical format information (R-PFI) in the R physical format information zone (R-PFIZ) (SA4).

8. The information recording and reproducing apparatus according to claim 6, **characterized in that** the recording means used for the data area side includes means for recording updated physical format information (U-PFI) in an extended R physical format information zone (U-PFIZ) for updating (SB3) and means for recording latest recording management data (RMD) in an extended recording management zone (ExRMZ) (SB4) in a case where the setting means securely acquires the extended R physical format information zone (U-PFIZ) in the data area and securely acquires the extended recording management zone (ExRMZ).

9. The information recording and reproducing apparatus according to claim 6, **characterized in that** the recording means used for the data lead-in area side includes means for recording R physical format information (R-PFI) in the R physical format information zone (R-PFIZ) (SC3) and the recording means used for the data area side includes means for recording latest recording management data (RMD) in an extended recording management zone (ExRMZ) (SC4) in a case where the setting means securely acquires the extended recording management zone (ExRMZ) in the data area.

10. The information recording and reproducing apparatus according to claim 6, **characterized in that** the recording means used for the data lead-in area side uses a border-in also as the data lead-in area and records R physical format information (R-PFI) containing a copy of common information of families of storage media and an outermost peripheral address of a first border in the data lead-in area.
